# EUROPEAN PATENT SPECIFICATION

(11) **EP 4 132 028 B1**
(45) Date of publication and mention of the grant of the patent: **19.08.2026**
(21) Application number: 20932427.6
(22) Date of filing: 24.04.2020
(51) Int. Cl.: H04W 72/40, H04W 92/18

(54) **COMMUNICATION METHOD, DEVICE, AND SYSTEM**
KOMMUNIKATIONSVERFAHREN, -VORRICHTUNG UND -SYSTEM
PROCÉDÉ, DISPOSITIF ET SYSTÈME DE COMMUNICATION

(43) Date of publication of application: 08.02.2023
(73) Proprietor: Huawei Technologies Co., Ltd., Shenzhen, Guangdong 518129, (CN)
(72) Inventor: SU, Hongjia, Shenzhen, Guangdong 518129 (CN); DONG, Lei, Shenzhen, Guangdong 518129 (CN); XIANG, Zhengzheng, Shenzhen, Guangdong 518129 (CN); LU, Lei, Shenzhen, Guangdong 518129 (CN)
(74) Representative: Thun, Clemens
(86) International application number: PCT/CN2020/086803
(87) International publication number: WO 2021/212505

(56) References cited:
- WO-A1-2019/061422
- WO-A1-2020/033563
- WO-A1-2020/063742
- CN-A- 109 792 594
- CN-A- 110 972 290
- US-A1- 2017 295 601
- US-A1- 2020 008 183
- XIAOMI COMMUNICATIONS: "On Mode 2 resource allocation of V2x communications", 3GPP DRAFT; R1-1905413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi’an, China; 20190408 - 20190412, 2 April 2019 (2019-04-02), Mobile Competence Centre ; 650, route des Lucioles ; F-06921 Sophia-Antipolis Cedex ; France , XP051707484
- HUAWEI, HISILICON: "Sidelink resource allocation mode 2 for NR V2X", 3GPP DRAFT; R1-1903947, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi’an, China; 20190408 - 20190412, 2 April 2019 (2019-04-02), Mobile Competence Centre ; 650, route des Lucioles ; F-06921 Sophia-Antipolis Cedex ; France , XP051707062

## Description

### TECHNICAL FIELD

This application relates to the field of mobile communication technologies, and in particular, to a communication method, apparatus, and system.

### BACKGROUND

In a sidelink communication process, a terminal device serving as a transmit end (referred to as a transmit-end terminal device) may send sidelink control information (sidelink control information, SCI) and sidelink data in a slot (slot) to a terminal device serving as a receive end (referred to as a receive-end terminal device), and the receive-end terminal device receives and decodes the sidelink data based on the received SCI. Two resource allocation modes are available for a transmit-end terminal device in a new radio (new radio, NR) vehicle-to-everything (vehicle to everything, V2X) system. One resource allocation mode is mode-1 (mode-1). In the mode-1, a base station allocates a resource to the transmit-end terminal device. The other resource allocation mode is mode-2. In the mode-2, the transmit-end terminal device selects a resource by itself.

In the mode-2, the transmit-end terminal device triggers resource selection in a slot n, and obtains a sensing result in a resource sensing window (sensing window) defined by a slot range. The transmit-end terminal device excludes, based on the sensing result, an unavailable time-frequency resource within a resource selection window defined by the slot range, to obtain available time-frequency resources within the resource selection window; determines, from these available time-frequency resources, sidelink (sidelink, SL) time-frequency resources; and selects a time-frequency resource from the sidelink time-frequency resources to send data.

It can be learned that currently, the transmit-end terminal device sends data only based on the sensing result of the transmit-end terminal device, but the transmit-end terminal device does not know a channel status around the receive-end terminal device. If the transmit-end terminal device does not sense another terminal device in communication around the receive-end terminal device, the receive-end terminal device may be under strong interference caused by sidelink communication of the another terminal device when receiving data from the transmit-end terminal device. As a result, signal received quality of the receive-end terminal device is poor, and even receiving may fail.

US 2020/008183 discloses a method and an apparatus of handling device-to-device resource release in a wireless communication system.

WO 2020/033563 discloses control signaling for new radio vehicle-to-vehicle communication.

WO 2020/033422 discloses methods and apparatuses for autonomous resource selection in new radio vehicle to everything.

CN 110 972 290 discloses a resource allocation method for terminal direct communication.

### SUMMARY

The invention is defined in the independent claims. Additional features of the invention are provided in the dependent claims. In the following, parts of the description and drawings referring to embodiments which are not covered by the claims are not presented as embodiments of the invention, but as examples useful for understanding

### BRIEF DESCRIPTION OF DRAWINGS

FIG. 1 is a schematic diagram of several V2X application scenarios;
FIG. 2 is a schematic diagram of a resource sensing window and a resource selection window used by a terminal device to select a resource;
FIG. 3 is a schematic diagram of a receiving failure caused when a transmit-end terminal device sends data without considering a status of a receive-end terminal device;
FIG. 4 is a schematic diagram of excessive resource exclusion caused when a transmit-end terminal device sends data without considering a status of a receive-end terminal device;
FIG. 5 is a schematic diagram of an application scenario according to an embodiment of this application;
FIG. 6 is a flowchart of a communication method according to an embodiment of this application;
FIG. 7 is a schematic diagram of repeatedly sending first information according to an embodiment of this application;
FIG. 8 is a schematic diagram of indicating, by using 1st-stage SCI, a time-frequency resource for sending second information according to an embodiment of this application;
FIG. 9 is a schematic diagram showing that a slot in which a time-frequency resource for sending second information is located needs to be before a slot *n* + *t*₂ according to an embodiment of this application;
FIG. 10 is a schematic diagram of sending first data to a third terminal apparatus by a first terminal apparatus according to an embodiment of this application;
FIG. 11 is a schematic block diagram of a first terminal apparatus according to an embodiment of this application;
FIG. 12 is a schematic block diagram of a third terminal apparatus according to an embodiment of this application;
FIG. 13 is a schematic block diagram of a communication apparatus according to an embodiment of this application;
FIG. 14 is another schematic block diagram of a communication apparatus according to an embodiment of this application; and
FIG. 15 is still another schematic block diagram of a communication apparatus according to an embodiment of this application.

### DESCRIPTION OF EMBODIMENTS

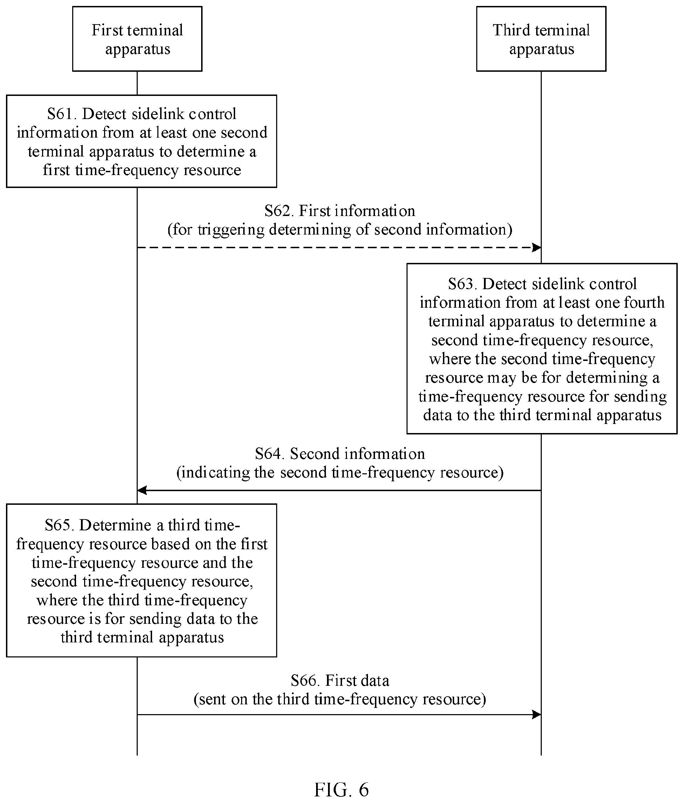

The invention made is described in the embodiments referring to figure 6.

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
(1) A terminal apparatus is, for example, a terminal device, or a module configured to implement a function of the terminal device, for example, a chip system. The chip system may be disposed in the terminal device. The terminal device includes a device that provides a voice and/or data connectivity for a user. Specifically, the terminal device includes a device that provides a voice for a user, or includes a device that provides data connectivity for a user, or includes a device that provides a voice and data connectivity for a user. For example, the terminal device may include a handheld device having a wireless connection function or a processing device connected to a wireless modem. The terminal device may communicate with a core network through a radio access network (radio access network, RAN), and exchange a voice or data with the RAN. The terminal device may include user equipment (user equipment, UE), a wireless terminal device, a mobile terminal device, a device-to-device (device-to-device, D2D) terminal device, a vehicle-to-everything (vehicle to everything, V2X) terminal device, a machine-to-machine/machine type communications (machine-to-machine/machine-type communications, M2M/MTC) terminal device, an internet of things (internet of things, IoT) terminal device, light UE (light UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus, For example, it may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of example rather than limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

In embodiments of this application, the terminal device may further include a relay (relay). Alternatively, it is understood as that any device that can perform data communication with a base station may be considered as a terminal device.

In embodiments of this application, an apparatus configured to implement a function of the terminal device may be a terminal device, or may be an apparatus, for example, a chip system, that can support the terminal device in implementing the function. The apparatus may be mounted in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal device.

(2) A network device includes, for example, an access network (access network, AN) device such as a base station (for example, an access point), and may be a device that is in an access network and that communicates with a wireless terminal device over an air interface through one or more cells. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, to serve as a router between a terminal device and a remaining part of the access network, where the remaining part of the access network may include an IP network. The RSU may be a fixed infrastructure entity supporting a V2X application, and may exchange a message with another entity supporting the V2X application. The network device may further coordinate attribute management of the air interface. For example, the network device may include a next-generation NodeB (next generation node B, gNB) in a 5th generation mobile communication technology (the 5th generation, 5G) new radio (new radio, NR) system (also referred to as an NR system for short), or may include a central unit (centralized unit, CU) and a distributed unit (distributed unit, DU) in a cloud access network (cloud radio access network, Cloud RAN) system. This is not limited in embodiments of this application.

The network device may further include a core network device. The core network device includes, for example, an access and mobility management function (access and mobility management function, AMF), a user plane function (user plane function, UPF), or the like.

Because embodiments of this application mainly relate to an access network device, the network device described below is an access network device unless otherwise specified.

In embodiments of this application, an apparatus configured to implement a function of a network device may be a network device, or may be an apparatus, for example, a chip system, that can support the network device in implementing the function. The apparatus may be mounted in the network device. In the technical solutions provided in embodiments of this application, the technical solutions provided in embodiments of this application are described by using an example in which the apparatus configured to implement the function of the network device is the network device.

(3) V2X refers to interconnection between a vehicle and the outside, and is a basic and key technology of a future intelligent vehicle, autonomous driving, and an intelligent transportation system. V2X optimizes a specific application requirement of V2X based on an existing device-to-device (device-to-device, D2D) technology. This requires that an access delay of a V2X device be further reduced and a resource collision problem be resolved.

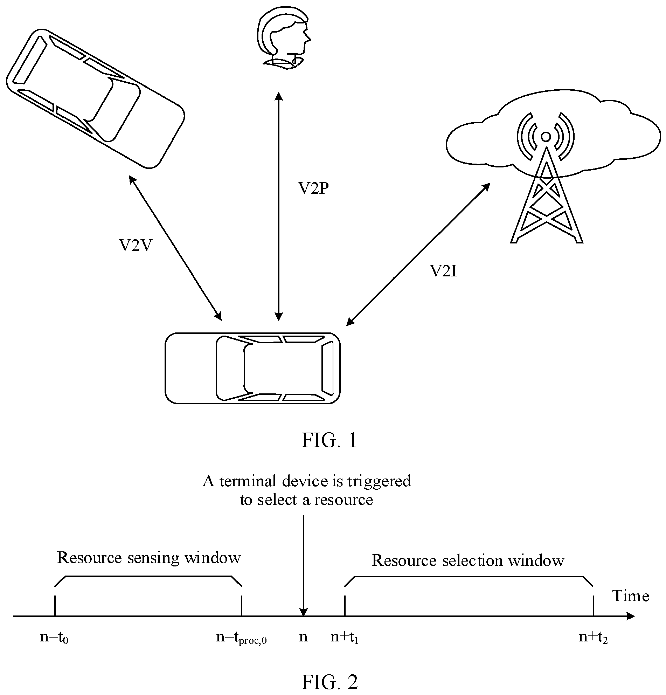

V2X specifically further includes several application requirements such as vehicle-to-vehicle (vehicle-to-vehicle, V2V), vehicle-to-infrastructure (vehicle-to-infrastructure, V2I), and vehicle-to-pedestrian (vehicle-to-pedestrian, V2P) direct communication, and vehicle-to-network (vehicle-to-network, V2N) communication interaction. As shown in FIG. 1, V2V refers to communication between vehicles, V2P refers to communication between a vehicle and a person (including a pedestrian, a bicycle rider, a driver, or a passenger), and V2I refers to communication between a vehicle and a network device such as an RSU. In addition, V2N may be included in V2I. V2N refers to communication between a vehicle and a base station/a network.

V2P may be used for safety warning for a pedestrian or a non-motor vehicle on a road. A vehicle may communicate, through V2I, with a road or even another infrastructure such as a traffic light or a road barrier, to obtain road management information such as a traffic light signal time sequence. V2V may be used for information exchange and reminding between vehicles, and a most typical application is an anti-collision safety system between vehicles. V2N is a most widely used form of an internet of vehicles currently, and a main function of V2N is to enable a vehicle to connect to a cloud server through a mobile network, to use an application function, for example, navigation, entertainment, or anti-theft, provided by the cloud server.

In V2X, communication is mainly performed between terminal devices. For a transmission mode between terminal devices, a current standard protocol supports a broadcast manner, a multicast manner, and a unicast manner.

Broadcast manner: The broadcast manner means that a terminal device serving as a transmit end sends data in a broadcast mode, and a plurality of terminal devices can all receive sidelink control information (sidelink control information, SCI) or a sidelink shared channel (sidelink shared channel, SSCH) from the transmit end.

On a sidelink, a manner of ensuring that all terminal devices parse the control information from the transmit end is that the transmit end does not scramble the control information or that the transmit end scrambles the control information by using a scrambling code known to all the terminal devices.

Multicast manner: The multicast manner is similar to the broadcast manner. The terminal device serving as the transmit end sends data in the broadcast mode. A group of terminal devices can all parse the SCI or the SSCH.

Unicast manner: In the unicast manner, one terminal device sends data to the other terminal device, and another terminal device does not need to or cannot parse the data.

(4) The terms "system" and "network" may be used interchangeably in embodiments of this application. "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

In addition, unless otherwise stated, ordinal numbers such as "first" and "second" mentioned in embodiments of this application are used to distinguish between a plurality of objects, but are not used to limit sizes, content, a sequence, a time sequence, priorities, importance, or the like of the plurality of objects. For example, a first time-frequency resource and a second time-frequency resource are only used for distinguishing between different time-frequency resources, but do not indicate different sizes, priorities, importance degrees, or the like of the two time-frequency resources.

The foregoing describes concepts of some terms in embodiments of this application. The following describes technical features in embodiments of this application.

With development of wireless communication technologies, people have increasing requirements for a high data rate and user experience, and have increasing requirements for a proximity service for knowing people or things around and communicating with them. Therefore, a device-to-device D2D technology emerges. Application of the D2D technology can lighten load of a cellular network, reduce battery power consumption of user equipment, improve a data rate, and better meet a requirement for a proximity service. The D2D technology allows a plurality of terminal devices that support a D2D function to perform direct discovery and direct communication regardless of whether there is a network infrastructure. In view of features and advantages of the D2D technology, an internet of vehicles application scenario based on the D2D technology is proposed. However, considering security, a delay requirement is quite high in this scenario, and cannot be implemented by using the existing D2D technology.

Therefore, in a network of an LTE technology proposed in the 3rd generation partnership project (3rd generation partnership project, 3GPP), a V2X internet of vehicles technology is proposed. V2X communication refers to communication between a vehicle and anything outside, including V2V, V2P, V2I, and V2N. Refer to FIG. 1.

The V2X communication is intended for high-speed devices representative of vehicles, and is a basic and key technology to be used in future scenarios that have a quite high latency requirement in communication, such as scenarios of smart vehicles, autonomous driving, and intelligent transportation systems. The LTE V2X communication may support a communication scenario in which there is network coverage and a communication scenario in which there is no network coverage, and a resource allocation mode of the LTE V2X communication may be a network device scheduling mode, for example, an evolved universal terrestrial radio access network NodeB (E-UTRAN Node B, eNB) scheduling mode and a UE selection mode. Based on the V2X technology, vehicle user equipment (Vehicle UE, V-UE) can periodically send, or send by triggering some aperiodic events, some information of the V-UE to surrounding V-UEs, for example, location information, speed information, or intent information (turning, paralleling, or reversing). Similarly, the V-UE also receives information about other surrounding V-UEs in real time.

Long Term Evolution (long term evolution, LTE)-V2X meets some basic requirements in V2X scenarios. However, LTE-V2X cannot effectively support future application scenarios such as fully intelligent driving and autonomous driving. Therefore, V2X is further developed in the 5G NR technology. NR-V2X can support a lower transmission delay, more reliable communication transmission, a higher throughput, and better user experience, and meet requirements of more extensive application scenarios.

In a V2X communication process, a terminal device serving as a transmit end (also referred to as a transmit-end terminal device) sends, in a slot, SCI and sidelink data to a terminal device serving as a receive end (also referred to as a receive-end terminal device), and the receive-end terminal device receives and decodes the sidelink data based on the received SCI. In NR-V2X, there are two resource allocation modes for the transmit-end terminal device. One resource allocation mode is mode-1 (mode-1). In the mode-1, a base station allocates a resource to the transmit-end terminal device. The other resource allocation mode is mode-2. In the mode-2, the transmit-end terminal device selects a resource by itself.

The mode-1 is mainly applied to V2X communication in a case in which there is network coverage, and the base station performs resource allocation. Specifically, the mode-1 may further include a dynamic grant (dynamic grant, DG) mode and a configured grant (configured grant, CG) mode. In the DG mode of the mode-1, the base station schedules, by using downlink control information (downlink control information, DCI), the transmit-end terminal device to send sidelink data to the receive-end terminal device. In the CG mode of the mode-1, the base station configures a related sidelink time-frequency resource by using higher layer signaling, for example, radio resource control (radio resource control, RRC) signaling. The CG mode includes a CG type 1 (CG type 1) and a CG type 2 (CG type 2). The CG type 1 means that the transmit-end terminal device directly sends sidelink data on a sidelink time-frequency resource configured by the base station. The CG type 2 means that the base station sends DCI to activate a sidelink time-frequency resource configured by the base station, and the transmit-end terminal device sends, after receiving the DCI, sidelink data on the sidelink time-frequency resource configured by the base station.

In the mode-2, selection of the sidelink time-frequency resource by the transmit-end terminal device does not depend on the base station. This mode is not limited to network coverage. When there is no network coverage, the transmit-end terminal device may also use this mode for communication.

In the mode-2, the transmit-end terminal device triggers resource selection in a slot n, and obtains a sensing result in a resource sensing window [*n* - *t*₀,*n* - *t*_{*proc,*0}) defined by a slot range. Refer to FIG. 2. *t*₀ is a boundary value of the resource sensing window. For example, *t*₀ may be 1100 ms or 100 ms, or may be another value. A 15 kHz subcarrier spacing is used as an example. *t*₀ = 1100 slots or 100 slots. Alternatively, a 60 kHz subcarrier spacing is used as an example. *t*₀ = 4400 slots or 400 slots. *t*_{proc,0} is time at which the transmit-end terminal device processes the sensing result, where a value of *t*_{*proc,*0} varies depending on different capabilities of the terminal device, and *t*_{*proc,*0} ≥ 0.

The transmit-end terminal device excludes, based on the sensing result, an unavailable time-frequency resource within a resource selection window [*n* + *t*₁,*n* + *t*₂] defined by a slot range, to obtain an available time-frequency resource for sending sidelink data. For this, still refer to FIG. 2. 0 ≤ *t*₁ ≤ *t*_{*proc,*1}, where *t*_{*proc,*1} is time at which a terminal device processes the sensing result. A value of *t*_{*proc,*1} varies depending on different capabilities of the terminal device. *t*_{2_*min*} < *t₂* ≤ Remaining packet delay budget (packet delay budget, PDB). A PDB indicates a maximum latency from time at which a data packet is generated at a service layer to time at which the data packet is successfully sent. For example, at a moment n, a remaining PDB is a remaining latency from the time at which the data packet is generated at the service layer to the moment n. A unit of the PDB may be slot, subframe, or frame, or may be an absolute time, for example, millisecond or second.

A specific resource selection manner of the transmit-end terminal device is described as follows:
1. The transmit-end terminal device receives SCI from another terminal device in a resource pool within the resource sensing window [*n* - *t*_{0,}*n* - *t*_{*proc*,0}), where the SCI includes sensing information of the another terminal device. Further, the SCI is 1st-stage SCI (1st-stage SCI), and is sent on a physical sidelink control channel (physical sidelink control channel, PSCCH).
   One piece of SCI may schedule three times of transmission. For example, in the three times of transmission, the first time of transmission is initial transmission and the latter two times of transmission are retransmission, or all the three times of transmission are retransmission. The sensing information included in the SCI includes time-frequency resource information of scheduling data in the second time of transmission and the third time of transmission, periodic time-frequency resource information reflecting a data service periodicity, data priority information (priority of PSSCH), and the like. It may be understood that at a given moment, a terminal device sends SCI to reserve a resource (including a time-frequency resource) after the moment for data retransmission and new periodic data transmission.
2. If the transmit-end terminal device learns, from sensing information in SCI received from terminal device 1, that a time-frequency resource reserved by terminal device 1 is within the resource selection window [*n* + *t*₁,*n* + *t*₂] of the transmit-end terminal device, the transmit-end terminal device measures, based on the sensing information, a demodulation reference signal (demodulation reference signal, DMRS) of data or a control channel that needs to be sent by terminal device 1 on the time-frequency resource, to obtain reference signal received power (reference signal received power, RSRP). If the RSRP is greater than a preset RSRP threshold *Th_{RSRP},* the transmit-end terminal device excludes the time-frequency resource within the resource selection window.
3. After excluding an unavailable time-frequency resource within the resource selection window, the transmit-end terminal device may determine an available time-frequency resource in a remaining resource within the resource selection window. Therefore, the transmit-end terminal device selects a time-frequency resource from the available time-frequency resource to send data.

In an existing mechanism, a time-frequency resource used by the transmit-end terminal device to send data is selected based on the sensing result of the transmit-end terminal device within the resource sensing window [*n* - *t*₀,*n* - *t*_{*proc,*0})*.* In the technical solutions provided in embodiments of this application, unless otherwise specified, the sensing result is a result determined by using the foregoing three steps 1, 2, and 3. However, the transmit-end terminal device does not know a channel status around the receive-end terminal device. If the transmit-end terminal device does not sense another terminal device in communication around the receive-end terminal device, the receive-end terminal device may be under strong interference caused by sidelink communication of the another terminal device when receiving data from the transmit-end terminal device. As a result, signal received quality of the receive-end terminal device is poor, and even receiving may fail.

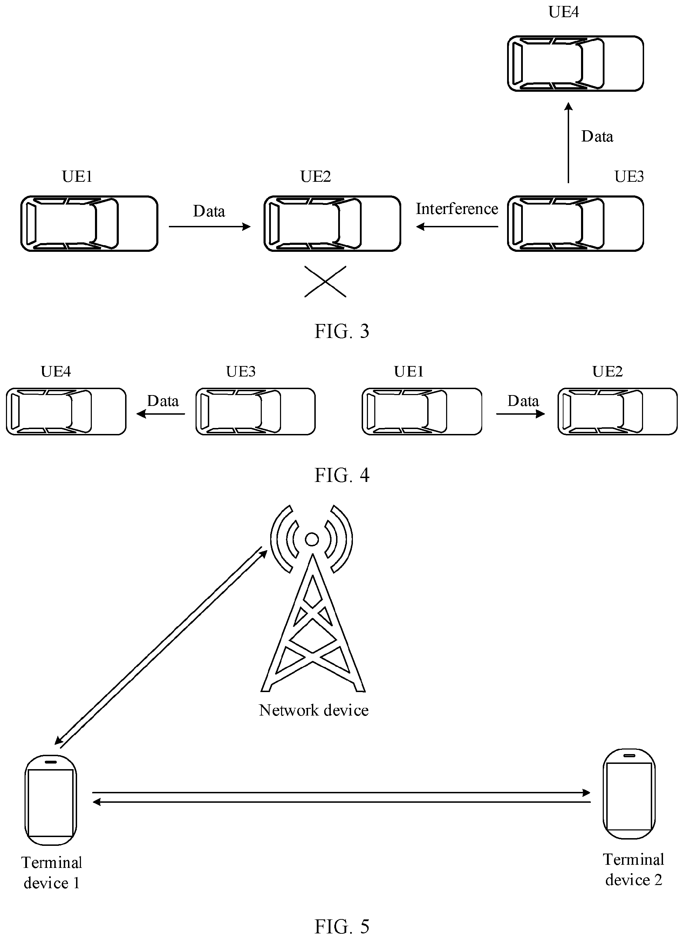

For example, refer to FIG. 3. UE1 selects a time-frequency resource based on a sensing result of the UE1, to send data to UE2. Because distances between UE3 and UE1 and between UE4 and UE1 are long, when performing sensing, UE1 considers that no other terminal device around UE1 performs sidelink communication, and UE1 sends data to UE2. Actually, UE3 is sending data to UE4. Because UE3 and UE2 are close to each other, sending the data by UE3 to UE4 causes strong interference to receiving the data by UE2 from UE1. As a result, UE2 cannot correctly decode the data from UE1.

For another example, refer to FIG. 4. UE1 performs sensing, and can sense data sent by UE3 to UE4. If RSRP measured by UE1 is greater than the preset RSRP threshold *Th_{RSRP},* UE1 considers that the data cannot be sent to UE2 on a time-frequency resource used by UE3, and considers that the time-frequency resource is an unavailable time-frequency resource. However, actually, because UE1 and UE4 are far away from each other, interference from UE1 to UE4 is very small, and sending data by UE1 to UE2 does not affect receiving the data by UE4 from UE3. Similarly, sending data by UE3 to UE4 does not affect receiving data by UE2 from UE1. For UE1, this is a case in which resources are excessively excluded, and some resources that should be available are considered as unavailable time-frequency resources. As a result, available time-frequency resources of UE1 are reduced.

In view of this, the technical solutions in embodiments of this application are provided. In embodiments of this application, a first terminal apparatus serving as a data transmit end may send first information to a third terminal apparatus, so that the third terminal apparatus can send second information to the first terminal apparatus. The second information may include a second time-frequency resource. The first terminal apparatus may use the second time-frequency resource as a reference factor when selecting a time-frequency resource. For example, the second time-frequency resource includes a time-frequency resource available for sending data to the third terminal apparatus. This indicates that if the first terminal apparatus sends data to the third terminal apparatus on the second time-frequency resource, there is a low probability that the third terminal apparatus is interfered when receiving the data. In this case, the first terminal apparatus may preferentially select the second time-frequency resource to send the data to the third terminal apparatus, to improve signal received quality and avoid a receiving failure. Alternatively, the second time-frequency resource includes a time-frequency resource unavailable for sending data to the third terminal apparatus. This indicates that if the first terminal apparatus sends data to the third terminal apparatus on the second time-frequency resource, there is a high probability that the third terminal apparatus is interfered when receiving the data. In this case, the first terminal apparatus may not select the second time-frequency resource to send the data to the third terminal apparatus. It can be learned that, in this embodiment of this application, when selecting a resource for sending data, the first terminal apparatus may not only use a sensing result of the first terminal apparatus as a consideration factor, but also use a sensing result of the third terminal apparatus as a consideration factor. In this case, both a channel status around the first terminal apparatus and a channel status around the third terminal apparatus are considered for the selected resource, to improve signal received quality.

The technical solutions provided in embodiments of this application may be applied to a D2D scenario, for example, an NR-D2D scenario, or may be applied to a V2X scenario, for example, an NR-V2X scenario, for example, may be applied to the internet of vehicles, such as V2X or V2V, or may be applied to in fields such as intelligent driving, assisted driving, or intelligent connected vehicles. Alternatively, the technical solutions may be further applied to other scenarios or other communication systems. For example, the technical solutions may be further applied to Uu interface resource selection in an NR system or a next-generation mobile communication system. This is not specifically limited.

The following describes a network architecture to which embodiments of this application are applied. FIG. 5 shows a network architecture to which embodiments of this application are applied.

FIG. 5 includes a network device and two terminal devices: terminal device 1 and terminal device 2. Both the two terminal devices may be located within coverage of the network device; or only terminal device 1 in the two terminal devices may be located within coverage of the network device, and terminal device 2 is not located within coverage of the network device; or neither of the two terminal devices is located within coverage of the network device. The two terminal devices may perform communication with each other through a sidelink. In FIG. 5, an example in which terminal device 1 is located within coverage of the network device and terminal device 2 is not located within coverage of the network device is used. Certainly, a quantity of terminal devices in FIG. 5 is merely an example. During actual application, the network device may provide services for a plurality of terminal devices.

The network device in FIG. 5 is, for example, an access network device such as a base station. The access network device corresponds to different devices in different systems. For example, the access network device corresponds to a 5G access network device such as a gNB in a 5G system, or is an access network device in a subsequently evolved communication system.

For example, the terminal device in FIG. 5 is a vehicle-mounted terminal device or a vehicle. However, the terminal device in embodiments of this application is not limited thereto.

The following describes, with reference to the accompanying drawings, the technical solutions provided in embodiments of this application.

An embodiment of this application provides a communication method. FIG. 6 is a flowchart of the method. In the following description process, an example in which the method is applied to the network architecture shown in FIG. 5 is used.

For ease of description, an example in which the method is performed by a first terminal apparatus and a third terminal apparatus is used in the following descriptions. Because an example in which this embodiment is applied to the network architecture shown in FIG. 5 is used, the first terminal apparatus described below may be terminal device 1 in the network architecture shown in FIG. 5 or a chip system disposed in terminal device 1, and the third terminal apparatus described below may be terminal device 2 in the network architecture shown in FIG. 5 or a chip system disposed in terminal device 2.

S61. The first terminal apparatus detects (or senses) sidelink control information from at least one second terminal apparatus to determine a first time-frequency resource.

In a network coverage area, a network device configures sidelink (sidelink, SL) resource pool (resource pool) information of a terminal apparatus in a local cell by using a system information block (system information block, SIB), cell-specific (cell-specific) RRC signaling, or UE-specific (UE-specific) RRC signaling. In a non-network coverage area, a terminal apparatus selects a time-frequency resource by using SL resource pool information preconfigured before delivery from a factory. The SL resource pool information indicates an SL resource pool. The terminal apparatus selects a time-frequency resource from the SL resource pool to perform SL communication with another terminal apparatus. A communication process includes one or more of unicast communication, multicast communication, or broadcast communication. In time domain, the SL resource pool includes one or more time units. One time unit may be one symbol (symbol), several symbols, one slot, one subframe (subframe), or the like. One or more time units included in one SL resource pool in time domain may be consecutive or discrete in physical time. The SL resource pool includes one or more frequency domain units in frequency domain. One frequency domain unit may be one resource block (resource block, RB), several RBs, one subchannel (sub channel), or the like. The subchannel may include one or more RBs.

For example, if the first terminal apparatus needs to send data to the third terminal apparatus, for example, the data is first data, the first terminal device performs sensing in a slot n; if the first terminal apparatus needs to send control information to the third terminal apparatus, the first terminal device performs sensing in a slot n; or if the first terminal apparatus needs to send control information and data to the third terminal apparatus, the first terminal device performs sensing in a slot n, to select a resource. In this embodiment of this application, an example in which the first terminal apparatus needs to send the first data to the third terminal apparatus is used. However, control information and/or data may be actually sent. The at least one second terminal apparatus may include the third terminal apparatus, and that the at least one second terminal apparatus may include the third terminal apparatus is to highlight another terminal apparatus. Therefore, the at least one second terminal apparatus may not include the third terminal apparatus herein.

The first terminal apparatus performs sensing in a slot n, that is, the first terminal apparatus detects the SCI from the at least one second terminal apparatus in the slot n. The first terminal apparatus selects, based on a sensing result of performing sensing in a sensing window [*n* - t₀,*n* - *t*_{*proc,*0}) defined by a slot range, an available time-frequency resource within a resource selection window [*n* + *t*₁,*n* + *t*₂] defined by the slot range. For a specific process in which the first terminal apparatus selects a resource, refer to the foregoing descriptions. When performing resource exclusion, the first terminal apparatus may exclude a time-frequency resource reserved by another terminal apparatus for sending data, exclude a time-frequency resource reserved by another terminal apparatus for sending control information, or exclude a time-frequency resource reserved by another terminal apparatus for sending data and a time-frequency resource reserved by another terminal apparatus for sending control information. In this embodiment of this application, before sending data, the first terminal apparatus may first trigger the third terminal apparatus to perform a resource assistance procedure. Therefore, before sending data to the third terminal apparatus, the first terminal apparatus may first send first information to the third terminal apparatus, to trigger the third terminal apparatus to send second information to the first terminal apparatus. For example, the first terminal apparatus may select an available seventh time-frequency resource based on the sensing result, to send the first information to the third terminal apparatus on the seventh time-frequency resource.

For example, a time domain location of the seventh time-frequency resource is *n* + *t*_{a_1}, where *t*₁ ≤ *t*_{*a_*1} < *t*₂. Before sending the first data to the third terminal apparatus, the first terminal apparatus needs to first send the first information to the third terminal apparatus and then receive the second information from the third terminal apparatus. That is, *t*_{a_1} is before a moment at which the first data is sent. However, as currently specified, when one terminal apparatus sends data to another terminal apparatus, the data needs to be sent within a remaining packet delay budget; otherwise, it is considered that the data fails to be sent. Therefore, it may be understood that, to ensure that the first data is sent within the remaining packet delay budget, a smaller value of *t*_{*a_*1} is better. For example, the first terminal apparatus determines one or more available time-frequency resources based on the sensing result. The seventh time-frequency resource may be a time-frequency resource earliest in time domain in the one or more available time-frequency resources, or the seventh time-frequency resource may not be a time-frequency resource earliest in time domain in the one or more available time-frequency resources, provided that *t*₁ ≤ *t*_{*a_*1} *< t₂* is met.

In addition, the first terminal apparatus may determine, based only on the second information of the third terminal apparatus, a time-frequency resource for sending data to the third terminal apparatus, or the first terminal apparatus may determine, based on the sensing result of the first terminal apparatus and the second information of the third terminal apparatus, a time-frequency resource for sending data to the third terminal apparatus. If the first terminal apparatus determines, based on the sensing result of the first terminal apparatus and the second information of the third terminal apparatus, the time-frequency resource for sending the data to the third terminal apparatus, the first terminal apparatus may further determine the first time-frequency resource based on the sensing result, where the first time-frequency resource may include a time-frequency resource unavailable for sending data to the third terminal apparatus, or include a time-frequency resource available for sending data to the third terminal apparatus. Therefore, the first terminal apparatus may subsequently determine, based on the first time-frequency resource and the second information, the time-frequency resource for sending data to the third terminal apparatus.

S62. The first terminal apparatus sends the first information to the third terminal apparatus, and the third terminal apparatus receives the first information from the first terminal apparatus. The first information is for triggering determining of the second information, where the first information may be used as trigger information to trigger the third terminal apparatus to determine the second information. Therefore, the first information may also be referred to as trigger information, request information, or the like, and a name of the information is not limited. The second information may be used by the first terminal apparatus to determine the time-frequency resource for sending data to the third terminal apparatus.

In this embodiment of this application, before sending data to the third terminal apparatus, the first terminal apparatus may first trigger the third terminal apparatus to perform a resource assistance procedure, and then select, based on the second information fed back by the third terminal apparatus, the time-frequency resource for sending data to the third terminal apparatus. To obtain the second information from the third terminal apparatus, the first terminal apparatus may first send the first information to the third terminal apparatus, to trigger the third terminal apparatus to determine the second information.

As described above, for example, if the first terminal apparatus selects the seventh time-frequency resource to send the first information, in S62, the first terminal apparatus may send the first information to the third terminal apparatus on the seventh time-frequency resource, and the third terminal apparatus may also receive the first information from the first terminal apparatus on the seventh time-frequency resource.

When sending sidelink information, a terminal apparatus generally sends 1st-stage SCI (1st-stage SCI) and 2nd-stage SCI (2nd-stage SCI), and may further send data (data). This may be understood as: When sending the sidelink information, the terminal apparatus may send only control information (the 1st-stage SCI and the 2nd-stage SCI), or send only the data, or may send the 1st-stage SCI, the 2nd-stage SCI, and the data. The 1st-stage SCI is sent, for example, on a control channel, and the 2nd-stage SCI is sent, for example, on a data channel. The 1st-stage SCI is for scheduling the 2nd-stage SCI and the data. The 2nd-stage SCI is also for scheduling the data. For example, the 2nd-stage SCI includes at least a source address (source ID), the control channel is, for example, a physical sidelink control channel (physical sidelink control channel, PSCCH), and the data channel is, for example, a physical sidelink shared channel (physical sidelink shared channel, PSSCH). In addition, the 1st-stage SCI may indicate a time-frequency resource for sending the 2nd-stage SCI, including bit rate information for determining the 2nd-stage SCI. In this case, the first terminal apparatus may include the first information in one piece of SCI, and send the SCI to the third terminal apparatus. The 1st-stage SCI is generally broadcast information, and all terminal apparatuses need to receive and decode the 1st-stage SCI. Specifically, for a terminal apparatus that needs to perform sensing and autonomous user resource selection, the 1st-stage SCI includes control information for sensing and autonomous user resource selection, for example, one or more of time-frequency resource information, priority information, or periodic time-frequency resource information that reflects a data service periodicity. The 2nd-stage SCI may have different formats. For example, the 2nd-stage SCI includes different control information fields for different transmission, for example, for geographical location-based multicast. Therefore, control information required by terminal apparatuses of different standard versions or terminal apparatuses supporting different functions is carried only in the 2nd-stage SCI. The 1st-stage SCI carries common information required by all terminal apparatuses (for example, including one or more of terminal apparatuses of different standard versions (for example, a 3rd generation partnership project (3rd generation partnership project, 3GPP) version Rel-16 terminal apparatus and a 3GPP Rel-17 terminal apparatus), a terminal apparatus that supports geographical location-based multicast, or a terminal apparatus that supports resource assistance), including control information for sensing and autonomous user resource selection. In this case, all the terminal apparatuses may coexist in one resource pool because time-frequency resources are excluded based on 1st-stage SCI, and all the terminal apparatuses may exclude unavailable resources by detecting the 1st-stage SCI, thereby reducing a resource conflict probability and improving resource utilization.

Therefore, in an optional implementation of sending the first information, the first terminal apparatus may send the first information by including the first information in the 2nd-stage SCI. For example, the first terminal apparatus sends first control information to the third terminal apparatus, and the third terminal apparatus receives the first control information from the first terminal apparatus. The first control information may include first SCI and second SCI. The first SCI is 1st-stage SCI, and the second SCI is 2nd-stage SCI. In this case, the second SCI may include the first information.

Optionally, the first SCI may include a first field, and the first field may indicate that 2nd-stage SCI scheduled by the first SCI includes the first information. The 2nd-stage SCI scheduled by the first SCI is the second SCI. In other words, the first field may indicate that the second SCI includes the first information. The first SCI is 1st-stage SCI, and is sent in a broadcast manner. If a terminal apparatus that receives the first SCI can identify the first field, the terminal apparatus can determine that the second SCI includes the first information. For example, if the third terminal apparatus receives the first SCI and the second SCI, and can identify the first field, the third terminal apparatus can determine that the second SCI includes the first information. In this case, the third terminal apparatus obtains the first information from the second SCI when parsing the second SCI. In this manner, the third terminal apparatus can identify a format of the second SCI, to correctly obtain the first information. Optionally, priority information in the first SCI may be priority information of data to be sent to the third terminal apparatus, or may be a priority of data corresponding to/scheduled by the first SCI.

Optionally, the second SCI may further include one or more of the following information: a layer 1 (layer 1, L1) source identifier (source ID), an L1 destination identifier (destination ID), geographical location information of the first terminal apparatus, or communication range information. For example, the second SCI includes the L1 source identifier, the second SCI includes the L1 destination identifier, the second SCI includes the geographical location information of the first terminal apparatus, the second SCI includes the communication range information, the second SCI includes the L1 source identifier and the L1 destination identifier, the second SCI includes the L1 source identifier, the L1 destination identifier, and the geographical location information of the first terminal apparatus, or the second SCI includes the L1 source identifier, the L1 destination identifier, the geographical location information of the first terminal apparatus, and the communication range information.

The L1 source identifier indicates the first terminal apparatus, and the L1 destination identifier indicates the third terminal apparatus. Alternatively, the L1 source identifier and the L1 destination identifier may indicate data (including but not limited to a service to which the data belongs) sent by the first terminal apparatus to the third terminal apparatus. Therefore, the first terminal apparatus and the third terminal apparatus may determine, based on the L1 source identifier and the L1 destination identifier, whether current communication is related to the first terminal apparatus and the third terminal apparatus.

The geographical location information of the first terminal apparatus may be zone identification information (Zone ID) or other geographical location-related information, and is for identifying a geographical location of the first terminal apparatus. The communication range information indicates a communication range required by the control information and/or the data sent by the first terminal apparatus.

In this case, after receiving and decoding the second SCI, the third terminal apparatus may determine, based on the geographical location information of the first terminal apparatus and the communication range information, whether to respond to the control information, the data, or the like from the first terminal apparatus. For example, if the third terminal apparatus determines that the control information and/or the data from the first terminal apparatus do/does not meet a requirement of the communication range information included in the second SCI (for example, the communication range is 100 m), the third terminal apparatus may not respond to information (the control information and/or the data) from the first terminal apparatus, for example, may not send the second information to the first terminal apparatus. Otherwise, the third terminal apparatus may respond to the information (the control information and/or the data) from the first terminal apparatus, for example, may send the second information to the first terminal apparatus. If the information from the first terminal apparatus does not meet the requirement of the communication range information, it indicates that the first terminal apparatus is far away from the third terminal apparatus. In this case, sending the second information by the third terminal apparatus to the first terminal apparatus is not helpful to a sending process of the first terminal apparatus. Therefore, the third terminal apparatus may not need to send the second information to the first terminal apparatus. In this manner, signaling overheads can be reduced.

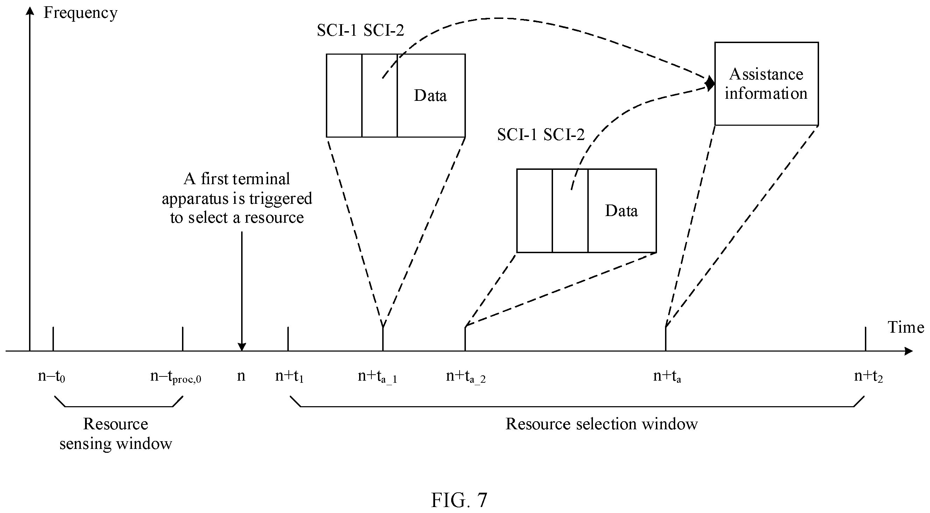

To improve a sending success rate of the first information, in an optional implementation, the first information may be repeatedly sent, that is, the first information may be further sent in a slot after *n* + *t*_{*a_*1}. If the first terminal apparatus repeatedly sends the first information, a time-frequency resource for repeatedly sending the first information may be indicated by the first SCI, so that the third terminal apparatus can correctly receive the repeatedly sent first information. For example, after sending the first information to the third terminal apparatus on the seventh time-frequency resource, the first terminal apparatus may further retransmit the first information to the third terminal apparatus on a sixth time-frequency resource. The first SCI may indicate the sixth time-frequency resource. Therefore, the third terminal apparatus can receive, on the sixth time-frequency resource based on an indication of the first SCI, the first information retransmitted from the first terminal apparatus. In addition, a quantity of times that the first information is repeatedly sent is not limited in this embodiment of this application. FIG. 7 is a schematic diagram of repeatedly sending the first information. For example, the first terminal apparatus triggers resource selection in a slot n, and the first terminal apparatus sends the first information to the third terminal apparatus in a slot *n* + *t*_{a_1} within a resource selection window [*n* + *t*₁,*n* + *t*₂] by using 2nd-stage SCI (the first SCI-2 from left to right in FIG. 7) based on a sensing result in a sensing window [*n* - *t*₀*_{,}n* - *t*_{*proc*,0}). For example, 1st-stage SCI (the first SCI-1 from left to right in FIG. 7) sent in the slot *n* + *t*_{*a*_1} further indicates a time-frequency resource for repeatedly sending the first information, and a time domain location of the time-frequency resource is a slot *n* + *t_{a_2.}* In this case, the first terminal apparatus repeatedly sends the first information to the third terminal apparatus in the slot *n* + *t_{a_2}* by using 2nd-stage SCI (the second SCI-2 from left to right in FIG. 7). The slot *n* + *tₐ* in FIG. 7 is, for example, a time domain location at which the third terminal apparatus sends the second information to the first terminal apparatus. In addition, the data in FIG. 7 may or may not be sent.

The first information may be for triggering the third terminal apparatus to determine the second information. After determining the second information, the third terminal apparatus may send the second information to the first terminal apparatus. In this case, the third terminal apparatus needs to determine a time-frequency resource for sending the second information. In an optional implementation, the first information may further indicate a fourth time-frequency resource, where the fourth time-frequency resource may be determined by the first terminal apparatus based on the sensing result of the first terminal apparatus, and the fourth time-frequency resource may be used by the third terminal apparatus to determine the time-frequency resource for sending the second information. For example, the fourth time-frequency resource is an available time-frequency resource determined by the first terminal apparatus based on the sensing result, where the fourth time-frequency resource may be understood as a recommended resource in this case. This indicates that interference received by the first terminal apparatus from another terminal apparatus when the first terminal apparatus receives data on the fourth time-frequency resource can meet a receiving condition, that is, whether reception reliability meets a requirement is not affected, or indicates that interference received by the first terminal apparatus when the first terminal apparatus receives data on the fourth time-frequency resource is small. Therefore, the first terminal apparatus recommends that the third terminal apparatus send the second information to the first terminal apparatus on the fourth time-frequency resource. Alternatively, the fourth time-frequency resource is an unavailable time-frequency resource determined by the first terminal apparatus based on the sensing result. This indicates that interference received by the first terminal apparatus from another terminal apparatus when the first terminal apparatus receives data on the fourth time-frequency resource cannot meet a receiving condition, that is, whether reception reliability meets a requirement is affected, or indicates that interference received by the first terminal apparatus when the first terminal apparatus receives data on the fourth time-frequency resource is large. In this case, that the first information indicates the fourth time-frequency resource may be considered as indicating the third terminal apparatus to minimize use of the fourth time-frequency resource to send the second information.

For example, the fourth time-frequency resource may include a time domain resource, a frequency domain resource, or a time domain resource and a frequency domain resource. The time domain resource may include one or more slots, and the frequency domain resource may include one or more subchannels (subchannels).

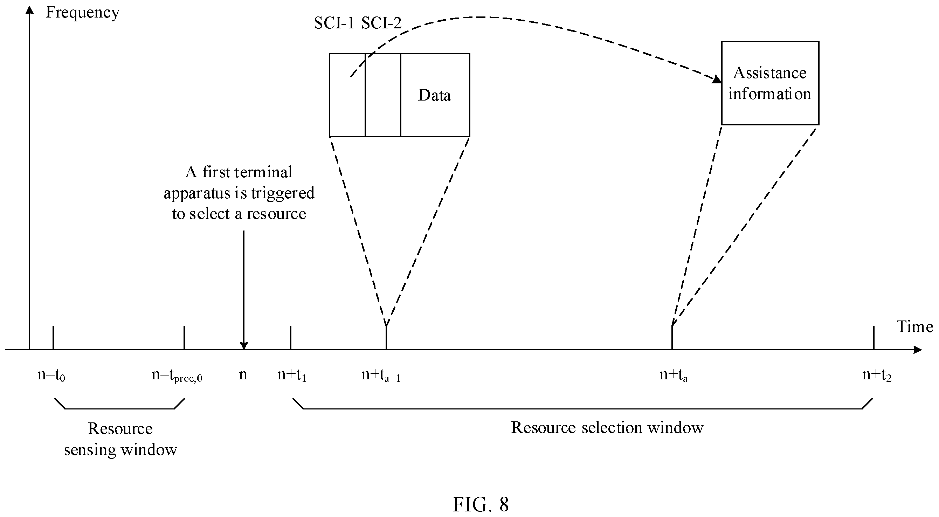

Alternatively, in another optional implementation, the first information may not indicate a fourth time-frequency resource, but the first SCI indicates the time-frequency resource for sending the second information. For example, the first SCI may indicate a fifth time-frequency resource, where the fifth time-frequency resource may be determined by the first terminal apparatus based on the sensing result of the first terminal apparatus, and the fifth time-frequency resource may be for sending the second information. The fifth time-frequency resource is an available time-frequency resource determined by the first terminal apparatus based on the sensing result. This indicates that interference received by the first terminal apparatus from another terminal apparatus when the first terminal apparatus receives data on the fifth time-frequency resource can meet a receiving condition, that is, whether reception reliability meets a requirement is not affected, or indicates that interference received by the first terminal apparatus when the first terminal apparatus receives data on the fifth time-frequency resource is small. Therefore, the first terminal apparatus indicates the third terminal apparatus to send the second information to the first terminal apparatus on the fifth time-frequency resource. In this case, the third terminal apparatus does not need to determine, based on another factor (for example, the sensing result of the third terminal apparatus), the time-frequency resource for sending the second information, but directly determines that the fifth time-frequency resource is the time-frequency resource for sending the second information. In other words, the first terminal apparatus reserves, by using the 1st-stage SCI, the time-frequency resource used by the third terminal apparatus to send the second information. Refer to FIG. 8. The first terminal apparatus sends the first SCI (SCI-1 in FIG. 8) to the third terminal apparatus in a slot *n* + *t*_{*a*_1}. The first SCI includes information about the fifth time-frequency resource, for example, a time domain location of the fifth time-frequency resource is a slot *n* + *tₐ*. The data in FIG. 8 may or may not be sent.

If the first information indicates the fourth time-frequency resource, the third terminal apparatus may further jointly determine, based on the sensing result of the third terminal apparatus and the fourth time-frequency resource, the time-frequency resource for sending the second information. In this case, when selecting the time-frequency resource for sending the second information, the third terminal apparatus considers both a receiving status of the third terminal apparatus and a resource sensing status of the third terminal apparatus. Therefore, the selected time-frequency resource is more appropriate. If the first SCI indicates the fifth time-frequency resource, the fifth time-frequency resource is a time-frequency resource that has been reserved by the first terminal apparatus and that is used by the third terminal apparatus to send the second information. In this case, the third terminal apparatus directly sends the second information on the fifth time-frequency resource, and does not need to determine, based on another factor, the time-frequency resource for sending the second information. In this manner, an operation process of the third terminal apparatus can be simplified, and a process of sending the second information by the third terminal apparatus can be accelerated, reducing a delay of the first data.

In addition, optionally, the first information may further include information for indicating a data packet size of the first data. Because the second information may be for determining the time-frequency resource for sending data to the third terminal apparatus, that is, the second information may indicate a corresponding time-frequency resource, the third terminal apparatus may also determine the second information based on the sensing result of the third terminal apparatus. When performing resource exclusion based on the sensing result, the third terminal apparatus may perform resource exclusion based on the data packet size of the first data. Therefore, the first terminal apparatus may notify the third terminal apparatus of the information about the data packet size of the first data, so that the third terminal apparatus excludes a resource. For example, the data packet size of the first data may include a size of a subchannel occupied by the first data, that is, a quantity of subchannels occupied by the first data. For example, a total quantity of subchannels occupied by the first data is denoted as *L_{sub}.* For example, when performing resource exclusion based on the sensing result, the third terminal apparatus may perform resource exclusion based on a size of a subchannel occupied by a PSSCH carrying the first data. Therefore, the first terminal apparatus may notify the third terminal apparatus of information about the size of the subchannel occupied by the first data. For example, the PSSCH carrying the first data occupies two subchannels. In this case, when performing resource exclusion based on the sensing result, the third terminal apparatus may perform resource exclusion based on a size of the two subchannels, and does not need to perform resource exclusion based on another size (for example, one subchannel or three subchannels). For another example, the data packet size of the first data may include a transport block (transport block, TB) size (size) corresponding to the first data, and the third terminal apparatus may perform resource exclusion based on the TB size. Alternatively, the data packet size of the first data may further include other information.

In S62, the first terminal apparatus sends the first information to the third terminal apparatus, to trigger the third terminal apparatus to perform a resource assistance procedure. In this manner, the first terminal apparatus may trigger, as required, the third terminal apparatus to perform the resource assistance procedure. This can reduce redundant information received by the first terminal apparatus, and the manner is flexible. In addition, the first terminal apparatus may further notify the third terminal apparatus of the data packet size of the first data, so that a second time-frequency resource indicated by the third terminal apparatus by using the second information better matches the first data, and the resource assistance procedure can be more accurate. The resource assistance procedure may be a process, recorded in steps S63 to S64, in which the third terminal apparatus performs sensing on a surrounding terminal apparatus, that is, detects sidelink control information of the surrounding terminal apparatus, and determines the second information based on a detection result.

Alternatively, in this embodiment of this application, the third terminal apparatus may actively perform the resource assistance procedure without being triggered by the first terminal apparatus. That is, the third terminal apparatus can perform the resource assistance procedure without receiving the first information from the first terminal apparatus. In this case, S62 may not need to be performed, that is, the first terminal apparatus does not need to send the first information to the third terminal apparatus, but the third terminal apparatus may actively send the second information. Therefore, S62 is an optional step, is not mandatory, and is represented by a dashed line in FIG. 6. For example, the third terminal apparatus may periodically send the second information. A manner in which the third terminal apparatus sends the second information is, for example, a broadcast manner or a multicast manner. One or more terminal apparatuses around the third terminal apparatus may receive the second information from the third terminal apparatus. If there is a terminal apparatus (for example, the first terminal apparatus) that needs to send data to the third terminal apparatus, after receiving the second information, the terminal apparatus may determine, based on the second information, a resource for sending the data to the third terminal apparatus. In this manner, the first terminal apparatus does not need to send the information to trigger the third terminal apparatus, and the third terminal apparatus may actively perform the resource assistance procedure. This helps reduce signaling overheads between the first terminal apparatus and the third terminal apparatus.

As described above, if the first terminal apparatus sends the first information to the third terminal apparatus, and the first information may include the information for indicating the data packet size of the first data, the third terminal apparatus may perform resource exclusion based on the data packet size of the first data when performing resource exclusion based on the sensing result. However, if the first terminal apparatus does not send the first information to the third terminal apparatus, the third terminal apparatus cannot learn which terminal apparatus is to send data to the third terminal apparatus, and cannot learn a data packet size of the to-be-sent data. In this case, when performing resource exclusion, the third terminal apparatus may perform resource exclusion based on one or more data packet sizes. For example, a data packet size of one piece of data includes a size of a subchannel occupied by the data, that is, a quantity of subchannels occupied by the data. In this case, when performing resource exclusion based on the sensing result, the third terminal apparatus may perform resource exclusion based on one or more subchannel sizes. For example, one or more subchannel sizes may be preconfigured in the third terminal apparatus, or the third terminal apparatus may determine one or more subchannel sizes of subchannels occupied by data historically received or sent by the third terminal apparatus, so that the third terminal apparatus can perform resource exclusion based on the one or more subchannel sizes. For example, three subchannel sizes are preconfigured in the third terminal apparatus: one subchannel, two subchannels, and three subchannels. In this case, when performing resource exclusion based on the sensing result, the third terminal apparatus may perform resource exclusion based on a size of one subchannel to obtain a resource exclusion result 1, perform resource exclusion based on a size of two subchannels to obtain a resource exclusion result 2, and perform resource exclusion based on a size of three subchannels to obtain a resource exclusion result 3. In this case, the second time-frequency resource that determined by the third terminal apparatus may include at least one time-frequency resource, and the at least one time-frequency resource may include one or more of a first part of time-frequency resources, a second part of time-frequency resources, or a third part of time-frequency resources. The first part of time-frequency resources include all or some time-frequency resources determined by the third terminal apparatus based on the resource exclusion result 1, and the second part of time-frequency resources include all or some time-frequency resources determined by the third terminal apparatus based on the resource exclusion result 2, and the third part of time-frequency resource include all or some time-frequency resources determined by the third terminal apparatus based on the resource exclusion result 3.

S63. The third terminal apparatus detects sidelink control information from at least one fourth terminal apparatus to determine a second time-frequency resource, where the second time-frequency resource may be for determining the time-frequency resource for sending data to the third terminal apparatus. The at least one fourth terminal apparatus may include the first terminal apparatus, or may not include the first terminal apparatus.

For example, if the third terminal apparatus receives the first information in the slot *n* + *t*_{a_1}, the third terminal apparatus may perform sensing (or detection), that is, the third terminal apparatus detects the SCI from the at least one fourth terminal apparatus. For example, the third terminal apparatus detects SCI from the at least one fourth terminal apparatus within a resource sensing window [*n* + *t*_{*a_*1} *- t*₀*_{,n}+t*_{*a_*1} - *t*_{*proc*,0}), obtains a sensing result, and selects a time-frequency resource from a resource selection window $\left[n+{t}_{{a}_{1}}+{t}_{1},n+{t}_{2}^{′}\right)$ based on the sensing result, where the ${t}_{2} \leq {t}_{2}^{′} < Remaining PDB$. If the first information received by the third terminal apparatus indicates the fourth time-frequency resource, the third terminal apparatus may determine, based on the sensing result of the third terminal apparatus and the fourth time-frequency resource, a time-frequency resource for sending the first information, and may further determine, based on the sensing result, the time-frequency resource indicated by the second information, that is, the second time-frequency resource. Alternatively, if the first information received by the third terminal apparatus does not indicate the fourth time-frequency resource, but the first SCI received by the third terminal apparatus indicates the fifth time-frequency resource, the third terminal apparatus may determine to send the second information on the fifth time-frequency resource, and the third terminal apparatus may determine the second time-frequency resource based on the sensing result of the third terminal apparatus.

The following briefly describes a manner in which the third terminal apparatus determines, based on the sensing result of the third terminal apparatus and the fourth time-frequency resource, the time-frequency resource for sending the second information. First, a case in which the fourth time-frequency resource is a time-frequency resource that the first terminal apparatus considers to be available is described, that is, the first terminal apparatus recommends that the third terminal apparatus send the second information on the fourth time-frequency resource.

If the third terminal apparatus determines, based on detection of the sidelink control information from the at least one fourth terminal apparatus, that the fourth time-frequency resource is not excluded from use, that is, the fourth time-frequency resource is an available time-frequency resource for the third terminal apparatus, the third terminal apparatus may determine to send the second information on the fourth time-frequency resource.

Alternatively, if the third terminal apparatus determines, based on detection of the sidelink control information from the at least one fourth terminal apparatus, that the fourth time-frequency resource is excluded from use, that is, the fourth time-frequency resource is an unavailable time-frequency resource for the third terminal apparatus, the third terminal apparatus may determine whether the priority of the second data is higher than a first priority threshold. If the priority of the second data is higher than the first priority threshold, the third terminal apparatus may select, from time-frequency resources (that is, available time-frequency resources) that are determined based on a sensing result of the third terminal apparatus and that are not excluded from use, a time-frequency resource for sending the second information. Alternatively, if the priority of the second data is lower than or equal to the first priority threshold, the third terminal apparatus may determine to send the second information on the fourth time-frequency resource. The second data is data that is to be sent on the fourth time-frequency resource by the fourth terminal apparatus reserving the fourth time-frequency resource, and the priority of the second data may be indicated by 1st-stage SCI that is received by the third terminal apparatus from the fourth terminal apparatus. That is, since the fourth time-frequency resource is an unavailable time-frequency resource for the third terminal apparatus, indicating that the third terminal apparatus determines, through sensing, that the fourth time-frequency resource has been reserved by another terminal apparatus, the second data is data that is to be sent on the fourth time-frequency resource reserved by the another terminal apparatus. The first priority threshold may be determined by the third terminal apparatus, determined by the first terminal apparatus and the third terminal apparatus through negotiation, configured by a network device, or specified in a protocol.

Alternatively, if the third terminal apparatus determines, based on detection of the sidelink control information from the at least one fourth terminal apparatus, that the fourth time-frequency resource is excluded from use, that is, the fourth time-frequency resource is an unavailable time-frequency resource for the third terminal apparatus, the third terminal apparatus may determine whether the priority of the second data is higher than the priority of the first data. If the priority of the second data is higher than the priority of the first data, the third terminal apparatus may select, from time-frequency resources (that is, available time-frequency resources) that are determined based on a sensing result of the third terminal apparatus and that are not excluded from use, a time-frequency resource for sending the second information. Alternatively, if the priority of the second data is lower than or equal to the priority of the first data, the third terminal apparatus may determine to send the second information on the fourth time-frequency resource. For explanations of content such as the second data and the priority of the second data, refer to the previous paragraph.

Alternatively, the fourth time-frequency resource may be a time-frequency resource that the first terminal apparatus considers to be unavailable, that is, the first terminal apparatus indicates the third terminal apparatus to minimize use of the fourth time-frequency resource to send the second information. In this case, when determining the time-frequency resource for sending the second information, if the third terminal apparatus determines, based on detection of the SCI from the at least one fourth terminal apparatus, that the fourth time-frequency resource is excluded from use, the third terminal apparatus may select, from time-frequency resources (that is, available time-frequency resources) that are determined based on a sensing result of the third terminal apparatus and that are not excluded from use, a time-frequency resource for sending the second information. If the third terminal apparatus determines, based on detection of the sidelink control information from the at least one fourth terminal apparatus, that the fourth time-frequency resource is not excluded from use, the third terminal apparatus may select, from time-frequency resources (that is, available time-frequency resources) that are determined based on a sensing result of the third terminal apparatus and that are not excluded from use, a time-frequency resource that is for sending the second information and that is different from the fourth time-frequency resource.

Herein, only several examples of manners in which the third terminal apparatus selects the time-frequency resource for sending the second information are provided. In this embodiment of this application, the third terminal apparatus may alternatively select, in another manner, the time-frequency resource for sending the second information.

The second information may indicate the second time-frequency resource. For example, the second time-frequency resource is an available time-frequency resource determined by the third terminal apparatus by detecting the SCI from the at least one fourth terminal apparatus. In other words, the second time-frequency resource includes the time-frequency resource available for sending data to the third terminal apparatus, where the second time-frequency resource may be understood as a recommended resource in this case. This indicates that interference received by the third terminal apparatus from another terminal apparatus when the third terminal apparatus receives data on the second time-frequency resource can meet a receiving condition, that is, whether reception reliability meets a requirement is not affected, or indicates that interference received by the third terminal apparatus from the another terminal apparatus when the third terminal apparatus receives data on the second time-frequency resource is small. Therefore, the third terminal apparatus recommends that the first terminal apparatus send data to the third terminal apparatus on the second time-frequency resource. Alternatively, the second time-frequency resource is an unavailable time-frequency resource determined by the third terminal apparatus by detecting the SCI from the at least one fourth terminal apparatus. In other words, the second time-frequency resource includes the time-frequency resource unavailable for sending data to the third terminal apparatus. This indicates that interference received by the third terminal apparatus from another terminal apparatus when the third terminal apparatus receives data on the second time-frequency resource cannot meet a receiving condition, that is, whether reception reliability meets a requirement is affected, or indicates that interference received by the third terminal apparatus from the another terminal apparatus when the third terminal apparatus receives data on the second time-frequency resource is large. Therefore, the third terminal apparatus indicates the first terminal apparatus to minimize use of the second time-frequency resource to send data to the third terminal apparatus.

For example, the second time-frequency resource may include a time domain resource, a frequency domain resource, or a time domain resource and a frequency domain resource. The time domain resource may include one or more slots, and the frequency domain resource may include one or more subchannels.

S64. The third terminal apparatus sends the second information to the first terminal apparatus, and the first terminal apparatus receives the second information from the third terminal apparatus. In this embodiment of this application, the second information is used for the resource assistance procedure. Therefore, the second information may also be referred to as assistance information, or the second information may have another name, and the name does not constitute a limitation on a technical feature.

After determining the time-frequency resource for sending the second information and the second time-frequency resource indicated by the second information, the third terminal apparatus may send the second information to the first terminal apparatus. The second information may indicate the second time-frequency resource, and the second time-frequency resource is for determining the time-frequency resource for sending data to the third terminal apparatus.

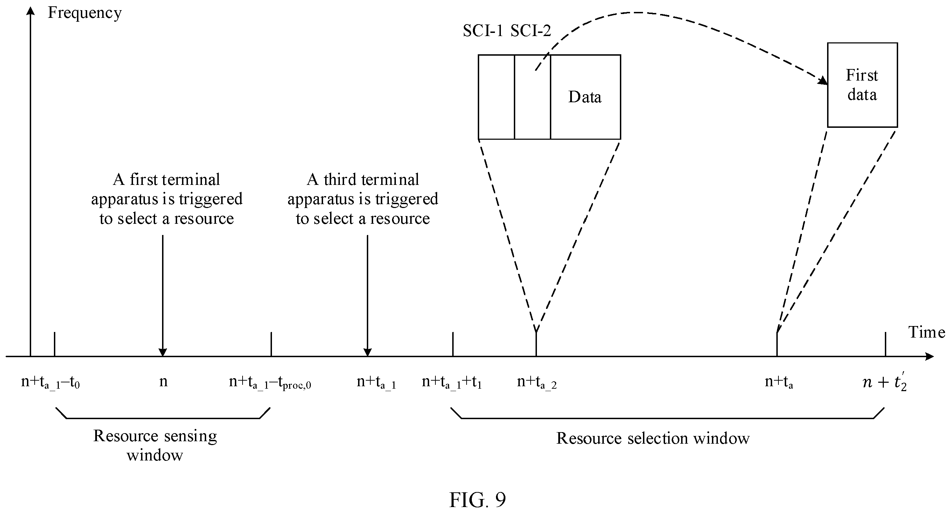

To meet a delay requirement of the first data sent by the first terminal apparatus to the third terminal apparatus, a slot in which the time-frequency resource selected by the third terminal apparatus for sending the second information is located needs to be before a slot *n* + *t*₂. For this, refer to FIG. 9. In FIG. 9, the third terminal apparatus receives the first information from the first terminal apparatus in a slot *n* + *t*_{*a*_1}, to be triggered to perform resource selection. In this case, the third terminal apparatus performs resource sensing, that is, detects the SCI from the at least one fourth terminal apparatus. When performing resource exclusion, the third terminal apparatus may exclude a time-frequency resource reserved by another terminal apparatus for sending data, exclude a time-frequency resource reserved by another terminal apparatus for sending control information, or exclude a time-frequency resource reserved by another terminal apparatus for sending data and a time-frequency resource reserved by another terminal apparatus for sending control information. If the third terminal apparatus fails to receive the first information in the slot *n* + *t*_{*a*_1}, the third terminal apparatus may receive, in a slot *n* + *t*_{*a*_2}, the first information retransmitted from the first terminal apparatus, and the third terminal apparatus is also triggered to perform resource sensing in the slot *n* + *t*_{*a*_2}. That is, each time the third terminal apparatus receives the first information, the third terminal apparatus is triggered to perform resource sensing. If the third terminal apparatus performs sensing for a plurality of times and sensing results are consistent, the third terminal apparatus may perform resource exclusion and the like based on the sensing result. Alternatively, if the third terminal apparatus performs sensing for a plurality of times, and sensing results are inconsistent, when the third terminal apparatus performs an operation such as resource exclusion, a resource sensing process triggered by the latest received first information may be used. Retransmission of the first information is not shown in FIG. 9, that is, FIG. 9 does not show the slot *n* + *t*_{*a*_2}. n + *t*_{*a*_2} in FIG. 9 represents the time domain location at which the third terminal apparatus sends the second information to the first terminal apparatus. The third terminal apparatus performs sensing within a resource sensing window [*n* + *t*_{*a_*1} - t₀, *n* + *t*_{*a_*1} - *t*_{*proc*,0}) based on a frequency domain size of a quantity of subchannels occupied by the first information (where the quantity of subchannels occupied by the first information may be configured, preconfigured, or predefined, for example, the quantity of subchannels occupied by the first information is 1). For example, if the first information further indicates the fourth time-frequency resource, the third terminal apparatus determines, within a resource selection window $\left[n+{t}_{a _ 1}+{t}_{1},n+{t}_{2}^{′}\right]$ based on the sensing result of the third terminal apparatus and the fourth time-frequency resource, the time-frequency resource for sending the second information. For example, the third terminal apparatus chooses to send the second information in the slot *n* + *t*_{*a*_2}. The second information indicates the second time-frequency resource, and the second time-frequency resource is, for example, an available time-frequency resource determined by the third terminal apparatus by performing sensing in the resource sensing window [*n* + *t*_{*a_*1} *- t*₀, *n* + *t*_{*a_*1} - *t*_{*proc*,0}) based on a frequency domain size of *L_{sub}.* For example, a time domain location of the second time-frequency resource is a slot *n* + *tₐ*, and a subchannel frequency domain start location and a length are *L_{sub.}*

As described above, the 1st-stage SCI is generally broadcast information, and all terminal apparatuses need to receive and decode the 1st-stage SCI. Specifically, for a terminal apparatus that needs to perform sensing and autonomous user resource selection, the 1st-stage SCI includes control information for sensing and autonomous user resource selection, for example, one or more of time-frequency resource information, priority information, or periodic time-frequency resource information that reflects a data service periodicity. The 2nd-stage SCI may have different formats. For example, the 2nd-stage SCI includes different control information fields for different transmission, for example, for geographical location-based multicast. Therefore, control information required by terminal apparatuses of different standard versions or terminal apparatuses supporting different functions is carried only in the 2nd-stage SCI. The 1st-stage SCI is common information required by all terminal apparatuses (for example, including one or more of terminal apparatuses of different standard versions (for example, a 3GPP Rel-16 terminal apparatus and a 3GPP Rel-17 terminal apparatus), a terminal apparatus that supports geographical location-based multicast, or a terminal apparatus that supports resource assistance), including control information for sensing and autonomous user resource selection. In this case, all the terminal apparatuses may coexist in one resource pool because time-frequency resources are excluded based on 1st-stage SCI, and all the terminal apparatuses may exclude unavailable resources by detecting the 1st-stage SCI, thereby reducing a resource conflict probability and improving resource utilization.

Therefore, in an optional implementation of sending the second information, the third terminal apparatus may send the second information by including the second information in the 2nd-stage SCI. For example, the third terminal apparatus sends second control information to the first terminal apparatus, and the first terminal apparatus receives the second control information from the third terminal apparatus. The second control information may include third SCI and fourth SCI. The third SCI is 1st-stage SCI, and the fourth SCI is 2nd-stage SCI. In this case, the fourth SCI may include the second information.

Optionally, the third SCI may include a second field, and the second field may indicate that 2nd-stage SCI scheduled by the third SCI includes the second information. The 2nd-stage SCI scheduled by the third SCI is the fourth SCI. In other words, the second field may indicate that the fourth SCI includes the second information. The third SCI is 1st-stage SCI, and is sent in a broadcast manner. If a terminal apparatus that receives the third SCI can identify the second field, the terminal apparatus can determine that the fourth SCI includes the second information. For example, if the third terminal apparatus receives the third SCI and the fourth SCI, and can identify the second field, the third terminal apparatus can determine that the fourth SCI includes the second information. In this case, the third terminal apparatus obtains the second information from the fourth SCI when parsing the second SCI. In this manner, the third terminal apparatus can identify a format of the fourth SCI, to correctly obtain the second information.

S65. The first terminal apparatus determines a third time-frequency resource based on the second time-frequency resource and the first time-frequency resource. Alternatively, the first terminal apparatus determines that the second time-frequency resource is a third time-frequency resource. The third time-frequency resource is a time-frequency resource used by the first terminal apparatus to send data to the third terminal apparatus.

In an optional implementation, if the second time-frequency resource indicated by the second information includes the time-frequency resource available for sending data to the third terminal apparatus, the first terminal apparatus may directly determine to send data to the third terminal apparatus on the second time-frequency resource. That is, when determining the time-frequency resource for sending data to the third terminal apparatus, the first terminal apparatus determines that the second time-frequency resource is the third time-frequency resource, with no need to consider another factor (for example, the sensing result of the first terminal apparatus). This is simple to implement for the first terminal apparatus, an operation process is simplified, sending of the first data can be accelerated, and a delay of the first data can be reduced.

Alternatively, if the second time-frequency resource indicated by the second information includes the time-frequency resource available for sending data to the third terminal apparatus, the first terminal apparatus may determine the third time-frequency resource based on the second time-frequency resource and the first time-frequency resource.

Alternatively, in another optional implementation, regardless of whether the second time-frequency resource indicated by the second information includes the time-frequency resource available for sending data to the third terminal apparatus or the time-frequency resource unavailable for sending data to the third terminal apparatus, the first terminal apparatus determines the third time-frequency resource based on both the second time-frequency resource and the first time-frequency resource, instead of directly determining the second time-frequency resource as the third time-frequency resource.

The following briefly describes a manner in which the first terminal apparatus determines the third time-frequency resource based on the second time-frequency resource and the first time-frequency resource. First, a case in which the second time-frequency resource includes the time-frequency resource available for sending data to the third terminal apparatus is described.

If the first terminal apparatus determines, based on detection of the SCI from the at least one second terminal apparatus, that the second time-frequency resource is not excluded from use, that is, the second time-frequency resource is also an available time-frequency resource for the first terminal apparatus, the first terminal apparatus may determine to send data on the second time-frequency resource. In this case, the second time-frequency resource and the third time-frequency resource are a same time-frequency resource.

If the first terminal apparatus determines, based on detection of the SCI from the at least one second terminal apparatus, that the second time-frequency resource is excluded from use, that is, the second time-frequency resource is an unavailable time-frequency resource for the first terminal apparatus, the first terminal apparatus may determine whether a priority of third data is higher than a second priority threshold. If the priority of the third data is higher than the second priority threshold: if the first time-frequency resource includes the time-frequency resource available for sending data to the third terminal apparatus, the first terminal apparatus may determine that the first time-frequency resource is the third time-frequency resource, or if the first time-frequency resource includes the time-frequency resource unavailable for sending data to the third terminal apparatus, the first terminal apparatus may select the third time-frequency resource from time-frequency resources (that is, available time-frequency resources) that are determined based on detection of the SCI from the at least one second terminal apparatus and that are not excluded from use. Alternatively, if the priority of the third data is lower than or equal to the second priority threshold, the first terminal apparatus may determine to send data on the second time-frequency resource. In this case, the second time-frequency resource and the third time-frequency resource are a same time-frequency resource. The third data is data that is to be sent on the second time-frequency resource by the second terminal apparatus reserving the second time-frequency resource, and the priority of the third data may be indicated by 1st-stage SCI that is received by the first terminal apparatus from the second terminal apparatus. That is, since the second time-frequency resource is an unavailable time-frequency resource for the first terminal apparatus, indicating that the first terminal apparatus determines, through sensing, that the second time-frequency resource has been reserved by another terminal apparatus, the third data is data that is to be sent on the second time-frequency resource reserved by the another terminal apparatus. The second priority threshold may be determined by the first terminal apparatus, determined by the first terminal apparatus and the third terminal apparatus through negotiation, configured by a network device, or specified in a protocol.

Alternatively, if the first terminal apparatus determines, based on detection of the SCI from the at least one second terminal apparatus, that the second time-frequency resource is excluded from use, that is, the second time-frequency resource is an unavailable time-frequency resource for the first terminal apparatus, the first terminal apparatus may determine whether a priority of third data is higher than the priority of the first data. If the priority of the third data is higher than the priority of the first data: if the first time-frequency resource includes the time-frequency resource available for sending data to the third terminal apparatus, the first terminal apparatus may determine that the first time-frequency resource is the third time-frequency resource, or if the first time-frequency resource includes the time-frequency resource unavailable for sending data to the third terminal apparatus, the first terminal apparatus may select the third time-frequency resource from time-frequency resources (that is, available time-frequency resources) that are determined based on detection of the SCI from the at least one second terminal apparatus and that are not excluded from use. Alternatively, if the priority of the third data is lower than or equal to the priority of the first data, the first terminal apparatus may determine to send data on the second time-frequency resource. In this case, the second time-frequency resource and the third time-frequency resource are a same time-frequency resource. For explanations of content such as the third data and the priority of the third data, refer to the previous paragraph.

In addition, the second time-frequency resource may alternatively include the time-frequency resource unavailable for sending data to the third terminal apparatus. On this condition, when determining the time-frequency resource for sending data, the first terminal apparatus determines, based on detection of the SCI from the at least one second terminal apparatus, that the second time-frequency resource is excluded from use. In this case, if the first time-frequency resource includes the time-frequency resource available for sending data to the third terminal apparatus, the first terminal apparatus may determine that the first time-frequency resource is the third time-frequency resource. Alternatively, if the first time-frequency resource includes the time-frequency resource unavailable for sending data to the third terminal apparatus, the first terminal apparatus may select the third time-frequency resource from time-frequency resources (that is, available time-frequency resources) that are determined based on detection of the SCI from the at least one second terminal apparatus and that are not excluded from use. Alternatively, the first terminal apparatus determines, based on detection of the SCI from the at least one second terminal apparatus, that the second time-frequency resource is not excluded from use. In this case, if the first time-frequency resource includes the time-frequency resource available for sending data to the third terminal apparatus, the first terminal apparatus may determine that the first time-frequency resource is the third time-frequency resource. Alternatively, if the first time-frequency resource includes the time-frequency resource unavailable for sending data to the third terminal apparatus, the first terminal apparatus may select the third time-frequency resource from time-frequency resource (that is, available time-frequency resources) that are determined based on detection of the SCI from the at least one second terminal apparatus and that are not excluded from use, and does not select the second time-frequency resource as the third time-frequency resource.

Herein, only several examples of manners in which the first terminal apparatus selects the time-frequency resource for sending data are provided. In this embodiment of this application, the first terminal apparatus may alternatively select, in another manner, the time-frequency resource for sending data.

S66. The first terminal apparatus sends the first data to the third terminal apparatus on the third time-frequency resource, and the third terminal apparatus receives the first data from the first terminal apparatus on the third time-frequency resource.

In this embodiment of this application, an example in which the first terminal apparatus sends the first data to the third terminal apparatus is used. However, control information, or control information and data may be actually sent. If control information, or control information and data are sent, the method in this embodiment of this application is also applicable.

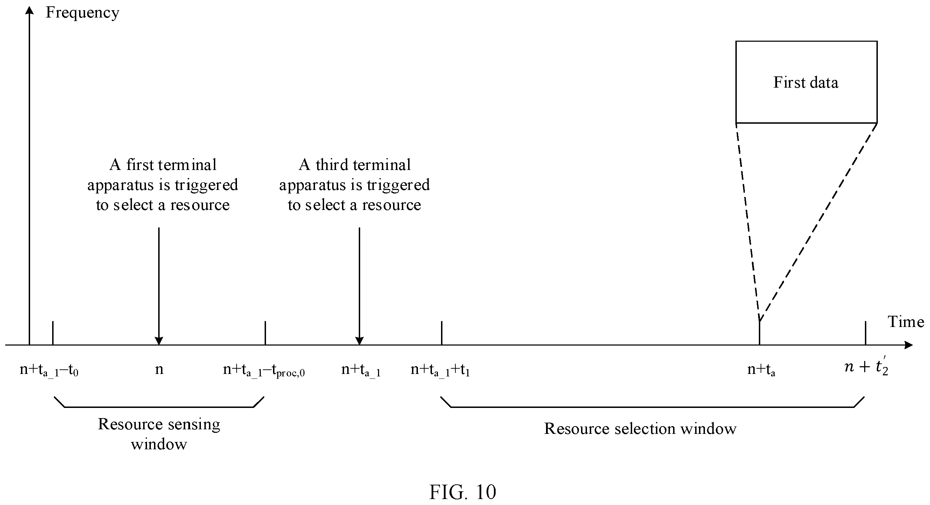

For example, refer to FIG. 10. The third terminal apparatus performs sensing within a resource sensing window [*n* + *t*_{*a_*1} *- t*₀*, n* + *t*_{*a_*1} - *t*_{*proc*,0}), to determine the second time-frequency resource. The third terminal apparatus receives the first data from the first terminal apparatus in a slot *n* + *tₐ* within a resource selection window $\left[n+{t}_{a _ 1}+{t}_{1},n+{t}_{2}^{′}\right]$, where the first data is carried on a PSSCH, and the slot *n* + *tₐ* is a time domain location of the third time-frequency resource.

In an optional implementation, the first information sent by the first terminal apparatus and the second information sent by the third terminal apparatus may use a same control information format, that is, the second SCI that carries the first information and the fourth SCI that carries the second information have a same size. Values of some fields are defined as 0 in some cases, or some fields that do not exist may be filled by using reserved bits, to ensure that sizes of the second SCI and the fourth SCI are the same. This can avoid defining a new format of 2nd-stage SCI as much as possible, and reduce signaling overheads for indicating different formats of 2nd-stage SCI.

In addition, the first information may not be included in the second SCI, for example, carried in a media access control (media access control, MAC) control element (control element, CE), and/or the second information may not be included in the fourth SCI, for example, carried in a MAC CE. The foregoing procedure does not change.

In this embodiment of this application, the first terminal apparatus may select, based on the sensing result of the third terminal apparatus, the time-frequency resource for sending data to the third terminal apparatus, or may select, based on both the sensing result of the first terminal apparatus and the sensing result of the third terminal apparatus, the time-frequency resource for sending data to the third terminal apparatus. This resolves a problem that a selected time-frequency resource may be interfered with by another terminal apparatus or incorrectly determined due to an incomplete sensing result of the first terminal apparatus, and can reduce a resource selection conflict probability and improve transmission reliability and system resource utilization.

With reference to the accompanying drawings, the following describes apparatuses configured to implement the foregoing methods in embodiments of this application. Therefore, all the foregoing content may be used in the following embodiments. Repeated content is not described again.

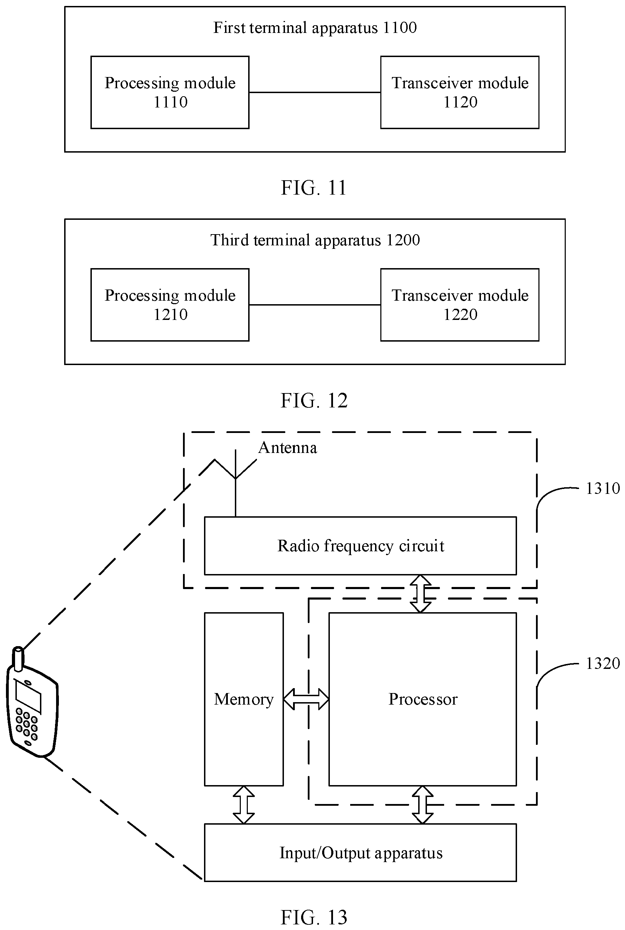

FIG. 11 is a schematic block diagram of a communication apparatus 1100 according to an embodiment of this application. For example, the communication apparatus 1100 is a first terminal apparatus 1100.

The first terminal apparatus 1100 includes a processing module 1110 and a transceiver module 1120. For example, the first terminal apparatus 1100 may be a terminal device, or may be a chip used in the terminal device, or another combined device, component, or the like that has a function of the terminal device. When the first terminal apparatus 1100 is the terminal device, the transceiver module 1120 may be a transceiver, and the transceiver may include an antenna, a radio frequency circuit, and the like; and the processing module 1110 may be a processor, for example, a baseband processor, and the baseband processor may include one or more central processing units (central processing units, CPUs). When the first terminal apparatus 1100 is the component that has the function of the terminal device, the transceiver module 1120 may be a radio frequency unit, and the processing module 1110 may be a processor, for example, a baseband processor. When the first terminal apparatus 1100 is a chip system, the transceiver module 1120 may be an input/output interface of a chip (for example, a baseband chip), and the processing module 1110 may be a processor of the chip system, and may include one or more central processing units. It should be understood that, in this embodiment of this application, the processing module 1110 may be implemented by a processor or a processor-related circuit component, and the transceiver module 1120 may be implemented by a transceiver or a transceiver-related circuit component.

For example, the processing module 1110 may be configured to perform all operations, except sending and receiving operations, performed by the first terminal apparatus in the embodiment shown in FIG. 6, for example, S61 and S65, and/or configured to support another process of the technology described in this specification. The transceiver module 1120 may be configured to perform all sending and receiving operations performed by the first terminal apparatus in the embodiment shown in FIG. 6, for example, S62, S64 and S66, and/or configured to support another process of the technology described in this specification.

In addition, the transceiver module 1120 may be one functional module. The functional module can implement both a sending operation and a receiving operation. For example, the transceiver module 1120 may be configured to perform all the sending and receiving operations performed by the first terminal apparatus in the embodiment shown in FIG. 6. For example, when a sending operation is performed, it may be considered that the transceiver module 1120 is a sending module; and when a receiving operation is performed, it may be considered that the transceiver module 1120 is a receiving module. Alternatively, the transceiver module 1120 may include two functional modules. The transceiver module 1120 may be considered as a general term of the two functional modules, and the two functional modules are a sending module and a receiving module. The sending module is configured to implement a sending operation. For example, the sending module may be configured to perform all sending operations performed by the first terminal apparatus in the embodiment shown in FIG. 6. The receiving module is configured to implement a receiving operation. For example, the receiving module may be configured to perform all receiving operations performed by the first terminal apparatus in the embodiment shown in FIG. 6.

The processing module 1110 is configured to detect sidelink control information from at least one second terminal apparatus to determine a first time-frequency resource, where the at least one second terminal apparatus includes a third terminal apparatus, and the first time-frequency resource includes a time-frequency resource unavailable for sending data to the third terminal apparatus.

The transceiver module 1120 is configured to send first information to the third terminal apparatus, where the first information is for triggering determining of second information.

The transceiver module 1120 is further configured to receive the second information from the third terminal apparatus, where the second information indicates a second time-frequency resource, and the second time-frequency resource is for determining a time-frequency resource for sending data to the third terminal apparatus.

The processing module 1110 is further configured to determine a third time-frequency resource based on the first time-frequency resource and the second time-frequency resource.

The transceiver module 1120 is further configured to send first data to the third terminal apparatus on the third time-frequency resource.

In an optional implementation, the transceiver module 1120 is configured to send the first information to the third terminal apparatus in the following manner:
sending first control information to the third terminal apparatus, where the first control information includes first SCI and second SCI, the first SCI is 1st-stage SCI, the second SCI is 2nd-stage SCI, and the second SCI includes the first information.

In an optional implementation, the first information further indicates a fourth time-frequency resource, and the fourth time-frequency resource is for determining a time-frequency resource for sending the second information.

In an optional implementation, the first SCI indicates a fifth time-frequency resource, and the fifth time-frequency resource is for sending the second information.

In an optional implementation, the first SCI further includes a first field, and the first field indicates that the second SCI includes the first information.

In an optional implementation, the transceiver module 1120 is further configured to retransmit the first information to the third terminal apparatus on a sixth time-frequency resource, where the sixth time-frequency resource is indicated by the first SCI.

In an optional implementation, the transceiver module 1120 is configured to receive the second information from the third terminal apparatus in the following manner:
receiving second control information from the third terminal apparatus, where the second control information includes third SCI and fourth SCI, the third SCI is 1st-stage SCI, the fourth SCI is 2nd-stage SCI, and the fourth SCI includes the second information.

In an optional implementation, the third SCI further includes a second field, and the second field indicates that the fourth SCI includes the second information.

In an optional implementation, the first information further includes information for indicating a data packet size of the first data, and the data packet size of the first data is for determining the second time-frequency resource.

In an optional implementation, the third time-frequency resource is the second time-frequency resource, and the transceiver module 1120 is configured to send the first data to the third terminal apparatus on the third time-frequency resource in the following manner:
sending the first data to the third terminal apparatus on the second time-frequency resource.

In an optional implementation, the processing module 1110 is configured to detect the sidelink control information from the at least one second terminal apparatus to determine the first time-frequency resource, and is further configured to detect the sidelink control information from the at least one second terminal apparatus to determine a seventh time-frequency resource, where the seventh time-frequency resource is a time-frequency resource earliest in time domain in available time-frequency resources determined based on the detected sidelink control information.

The transceiver module 1120 is configured to send the first information to the third terminal apparatus in the following manner: sending the first information to the third terminal apparatus on the seventh time-frequency resource.

In an optional implementation, the second time-frequency resource includes a time-frequency resource available for sending data to the third terminal apparatus; or
the second time-frequency resource includes the time-frequency resource unavailable for sending data to the third terminal apparatus.

For other functions that can be implemented by the first terminal apparatus 1100, refer to the related descriptions in the embodiment shown in FIG. 6. Details are not described again.

FIG. 12 is a schematic block diagram of a communication apparatus 1200 according to an embodiment of this application. For example, the communication apparatus 1200 is a third terminal apparatus 1200.

The third terminal apparatus 1200 includes a processing module 1210 and a transceiver module 1220. For example, the third terminal apparatus 1200 may be a terminal device, or may be a chip used in the terminal device, or another combined device, component, or the like that has a function of the terminal device. When the third terminal apparatus 1200 is the terminal device, the transceiver module 1220 may be a transceiver, and the transceiver may include an antenna, a radio frequency circuit, and the like; and the processing module 1210 may be a processor, for example, a baseband processor, and the baseband processor may include one or more CPUs. When the third terminal apparatus 1200 is the component that has the function of the terminal device, the transceiver module 1220 may be a radio frequency unit, and the processing module 1210 may be a processor, for example, a baseband processor. When the third terminal apparatus 1200 is a chip system, the transceiver module 1220 may be an input/output interface of a chip (for example, a baseband chip), and the processing module 1210 may be a processor of the chip system, and may include one or more central processing units. It should be understood that, in this embodiment of this application, the processing module 1210 may be implemented by a processor or a processor-related circuit component, and the transceiver module 1220 may be implemented by a transceiver or a transceiver-related circuit component.

For example, the processing module 1210 may be configured to perform all operations, except sending and receiving operations, performed by the third terminal apparatus in the embodiment shown in FIG. 6, for example, S63, and/or configured to support another process of the technology described in this specification. The transceiver module 1220 may be configured to perform all sending and receiving operations performed by the third terminal apparatus in the embodiment shown in FIG. 6, for example, S62, S64 and S66, and/or configured to support another process of the technology described in this specification.

In addition, the transceiver module 1220 may be one functional module. The functional module can implement both a sending operation and a receiving operation. For example, the transceiver module 1220 may be configured to perform all the sending and receiving operations performed by the third terminal apparatus in the embodiment shown in FIG. 6. For example, when a sending operation is performed, it may be considered that the transceiver module 1220 is a sending module; and when a receiving operation is performed, it may be considered that the transceiver module 1220 is a receiving module. Alternatively, the transceiver module 1220 may include two functional modules. The transceiver module 1220 may be considered as a general term of the two functional modules, and the two functional modules are a sending module and a receiving module. The sending module is configured to implement a sending operation. For example, the sending module may be configured to perform all sending operations performed by the third terminal apparatus in the embodiment shown in FIG. 6. The receiving module is configured to implement a receiving operation. For example, the receiving module may be configured to perform all receiving operations performed by the third terminal apparatus in the embodiment shown in FIG. 6.

The transceiver module 1220 is configured to receive first information from a first terminal apparatus, where the first information is for triggering determining of second information.

The processing module 1210 is configured to detect sidelink control information from at least one fourth terminal apparatus to determine a second time-frequency resource, where the at least one fourth terminal apparatus includes the first terminal apparatus, and the second time-frequency resource is for determining a time-frequency resource for the first terminal apparatus to send data.

The transceiver module 1220 is further configured to send the second information to the first terminal apparatus, where the second information indicates the second time-frequency resource.

The transceiver module 1220 is further configured to receive first data from the first terminal apparatus.

In an optional implementation, the transceiver module 1220 is configured to receive the first information from the first terminal apparatus in the following manner:
receiving first control information from the first terminal apparatus, where the first control information includes first SCI and second SCI, the first SCI is 1st-stage SCI, the second SCI is 2nd-stage SCI, and the second SCI includes the first information.

In an optional implementation, the first information further indicates a fourth time-frequency resource, and the fourth time-frequency resource is for determining a time-frequency resource for sending the second information.

In an optional implementation, the processing module 1210 is further configured to:
determine, based on detection of the sidelink control information from the at least one fourth terminal apparatus, that the fourth time-frequency resource is not excluded from use, and determine to send the second information on the fourth time-frequency resource; and
if it is determined, based on detection of the sidelink control information from the at least one fourth terminal apparatus, that the fourth time-frequency resource is excluded from use, when a priority of second data is higher than a priority threshold, determine to send the second information on a time-frequency resource that is not excluded from use; otherwise, determine to send the second information on the fourth time-frequency resource; or
if it is determined, based on detection of the sidelink control information from the at least one fourth terminal apparatus, that the fourth time-frequency resource is excluded from use, when a priority of second data is higher than a priority of the first data, determine to send the second information on a time-frequency resource that is not excluded from use; otherwise, determine to send the second information on the fourth time-frequency resource, where
the second data is data that is to be sent on the fourth time-frequency resource by a fourth terminal apparatus reserving the fourth time-frequency resource.

In an optional implementation, the first SCI indicates a fifth time-frequency resource, and the fifth time-frequency resource is for sending the second information.

In an optional implementation, the processing module 1210 is further configured to determine to send the second information on the fifth time-frequency resource.

In an optional implementation, the first SCI further includes a first field, and the first field indicates that the second SCI includes the first information.

In an optional implementation, the transceiver module 1220 is further configured to receive, on a sixth time-frequency resource, the first information retransmitted from the first terminal apparatus, where the sixth time-frequency resource is indicated by the first SCI.

In an optional implementation, the transceiver module 1220 is configured to send the second information to the first terminal apparatus in the following manner:
sending second control information to the first terminal apparatus, where the second control information includes third SCI and fourth SCI, the third SCI is 1st-stage SCI, the fourth SCI is 2nd-stage SCI, and the fourth SCI includes the second information.

In an optional implementation, the third SCI further includes a second field, and the second field indicates that the fourth SCI includes the second information.

In an optional implementation, the first information further includes information for indicating a data packet size of the first data, and the processing module 1210 is configured to detect sidelink control information from at least one first terminal apparatus in the following manner to determine the second time-frequency resource:
determining the second time-frequency resource based on a detection result and the data packet size of the first data.

In an optional implementation, the second time-frequency resource includes a time-frequency resource available for sending data to the third terminal apparatus 1200; or
the second time-frequency resource includes a time-frequency resource unavailable for sending data to the third terminal apparatus 1200.

In an optional implementation, the transceiver module 1220 is configured to receive the first data from the first terminal apparatus in the following manner:
receiving the first data from the first terminal apparatus on a third time-frequency resource, where the third time-frequency resource is determined based on a first time-frequency resource and the second time-frequency resource, and the first time-frequency resource is determined by the first terminal apparatus by detecting sidelink control information from at least one second terminal apparatus.

For other functions that can be implemented by the third terminal apparatus 1200, refer to the related descriptions in the embodiment shown in FIG. 6. Details are not described again.

An embodiment of this application further provides a communication apparatus. The communication apparatus may be a terminal device, or may be a circuit. The communication apparatus may be configured to perform actions performed by the first terminal apparatus in the foregoing method embodiments.

When the communication apparatus is the terminal device, FIG. 13 is a simplified schematic diagram of a structure of the terminal device. For ease of understanding and illustration, FIG. 13 uses an example in which the terminal device is a mobile phone. As shown in FIG. 13, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to send and receive a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, only one memory and one processor are shown in FIG. 13. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the terminal device (the transceiver unit may be one functional unit, and the functional unit can implement a sending function and a receiving function; or the transceiver unit may include two functional units: a receiving unit that can implement a receiving function and a sending unit that can implement a sending function), and the processor that has a processing function may be considered as a processing unit of the terminal device. As shown in FIG. 13, the terminal device includes a transceiver unit 1310 and a processing unit 1320. The transceiver unit may also be referred to as a transceiver, a transceiver apparatus, or the like. The processing unit may also be referred to as a processor, a processing board, a processing module, a processing apparatus, or the like. Optionally, a component that is in the transceiver unit 1310 and that is configured to implement the receiving function may be considered as a receiving unit, and a component that is in the transceiver unit 1310 and that is configured to implement the sending function may be considered as a sending unit. In other words, the transceiver unit 1310 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

It should be understood that the transceiver unit 1310 is configured to perform a sending operation and a receiving operation on a terminal device side in the foregoing method embodiments, and the processing unit 1320 is configured to perform an operation other than the receiving operation and the sending operation of the terminal device in the foregoing method embodiments.

For example, in an implementation, the processing unit 1320 may be configured to perform all operations except sending and receiving operations performed by the first terminal apparatus in the embodiment shown in FIG. 6, for example, S61 and S65, and/or configured to support another process of the technology described in this specification. The transceiver unit 1310 may be configured to perform all the sending and receiving operations performed by the first terminal apparatus in the embodiment shown in FIG. 6, for example, S62, S64, and S66, and/or configured to support another process of the technology described in this specification.

For another example, in an implementation, the processing unit 1320 may be configured to perform all operations, except sending and receiving operations, performed by the third terminal apparatus in the embodiment shown in FIG. 6, for example, S63, and/or configured to support another process of the technology described in this specification. The transceiver unit 1310 may be configured to perform all the sending and receiving operations performed by the third terminal apparatus in the embodiment shown in FIG. 6, for example, S62, S64, and S66, and/or configured to support another process of the technology described in this specification.

When the communication apparatus is a chip apparatus or circuit, the apparatus may include a transceiver unit and a processing unit. The transceiver unit may be an input/output circuit and/or a communication interface. The processing unit is an integrated processor, a microprocessor, or an integrated circuit.

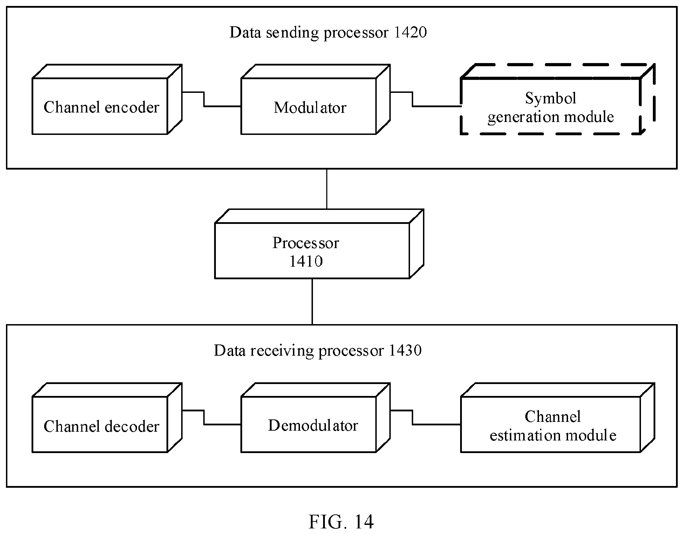

When the communication apparatus in this embodiment is the terminal device, refer to a device shown in FIG. 14. In an example, the device can complete a function similar to a function of the processing module 1110 in FIG. 11. In another example, the device can complete a function similar to the function of the processing module 1210 in FIG. 12. In FIG. 14, the device includes a processor 1410, a data sending processor 1420, and a data receiving processor 1430. The processing module 1110 in the foregoing embodiment may be the processor 1410 in FIG. 14, and implements a corresponding function. The transceiver module 1120 in the foregoing embodiment may be the data sending processor 1420 and/or the data receiving processor 1430 in FIG. 14, and implements a corresponding function. Alternatively, the processing module 1210 in the foregoing embodiment may be the processor 1410 in FIG. 14, and implement a corresponding function. The transceiver module 1220 in the foregoing embodiment may be the data sending processor 1420 and/or the data receiving processor 1430 in FIG. 14, and implement a corresponding function. Although FIG. 14 shows a channel encoder and a channel decoder, it may be understood that the modules do not constitute a limitation on this embodiment, and are merely examples.

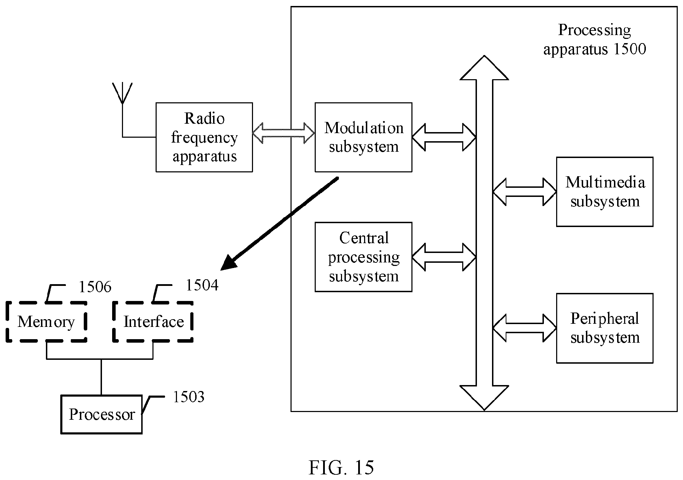

FIG. 15 shows another form of this embodiment. A processing apparatus 1500 includes modules such as a modulation subsystem, a central processing subsystem, and a peripheral subsystem. The communication apparatus in this embodiment may be used as the modulation subsystem. Specifically, the modulation subsystem may include a processor 1503 and an interface 1504. The processor 1503 completes a function of the processing module 1110, and the interface 1504 completes a function of the transceiver module 1120. Alternatively, the processor 1503 completes a function of the processing module 1210, and the interface 1504 completes a function of the transceiver module 1220. In another variant, the modulation subsystem includes a memory 1506, a processor 1503, and a program that is stored in the memory 1506 and that can be run on the processor. When executing the program, the processor 1503 implements the method on a terminal device side in the foregoing method embodiments. It should be noted that the memory 1506 may be nonvolatile or volatile. The memory 1506 may be located in the modulation subsystem, or may be located in the processing apparatus 1500, provided that the memory 1506 can be connected to the processor 1503.

An embodiment of this application provides a communication system. The first communication system may include the first terminal apparatus in the embodiment shown in FIG. 6 and the third terminal apparatus in the embodiment shown in FIG. 6. The first terminal apparatus is, for example, the first terminal apparatus 1100 in FIG. 11. The third terminal apparatus is, for example, the third terminal apparatus 1200 in FIG. 12.

An embodiment of this application further provides a computer-readable storage medium. The computer-readable storage medium stores a computer program. When the computer program is executed by a computer, the computer may implement a procedure related to the first terminal apparatus in the embodiment shown in FIG. 6 provided in the method embodiments.

An embodiment of this application further provides a computer-readable storage medium. The computer-readable storage medium is configured to store a computer program. When the computer program is executed by a computer, the computer may implement a procedure related to the first terminal apparatus in the embodiment shown in FIG. 6 provided in the method embodiments.

An embodiment of this application further provides a computer program product. The computer program product is configured to store a computer program. When the computer program is executed by a computer, the computer may implement a procedure related to the first terminal apparatus in the embodiment shown in FIG. 6 provided in the method embodiments.

An embodiment of this application further provides a computer program product. The computer program product is configured to store a computer program. When the computer program is executed by a computer, the computer may implement a procedure related to the third terminal apparatus in the embodiment shown in FIG. 6 provided in the method embodiments.

It should be understood that the processor in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the described system, apparatus, and unit, refer to a corresponding process in the foregoing method embodiments.

In the several embodiments provided in this application, it should be understood that the disclosed systems, apparatuses, and methods may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or a part of the steps of the methods described in embodiments of this application. The foregoing computer-readable storage medium may be any usable medium accessible by a computer. By way of example but not limitation, the computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk or another compact disc storage, a magnetic disk storage medium or another magnetic storage device, or any other medium that can carry or store expected program code in a form of an instruction or a data structure and that can be accessed by a computer.

The foregoing descriptions are merely specific implementations of this application, but are not intended to limit the protection scope of embodiments of this application. Therefore, the protection scope of embodiments of this application shall be subject to the protection scope of the claims.

## Claims

1. A communication method, performed by a first terminal apparatus, comprising:
detecting (S61) sidelink control information, SCI, from at least one second terminal apparatus to determine a first time-frequency resource, wherein the first time-frequency resource comprises a time-frequency resource unavailable for sending data to a third terminal apparatus;
sending (S62) first information to the third terminal apparatus, wherein the first information is for triggering determining of second information;
receiving (S64) the second information from the third terminal apparatus, wherein the second information indicates a second time-frequency resource, and the second time-frequency resource is for determining a time-frequency resource for sending data to the third terminal apparatus;
determining (S65) a third time-frequency resource based on the first time-frequency resource and the second time-frequency resource; and
sending (S66) first data to the third terminal apparatus on the third time-frequency resource.

2. The method according to claim 1, wherein the sending first information to the third terminal apparatus comprises:
sending first control information to the third terminal apparatus, wherein the first control information comprises first SCI and second SCI, the first SCI is 1st-stage SCI, the second SCI is 2nd-stage SCI, and the second SCI comprises the first information.

3. The method according to claim 2, wherein the first SCI further comprises a first field, and the first field indicates that the second SCI comprises the first information.

4. The method according to claim 1, wherein the first information further comprises information for indicating a data packet size of the first data, and the data packet size of the first data is for determining the second time-frequency resource.

5. The method according to claim 1, wherein the second time-frequency resource is an available time-frequency resource, and the sending first data to the third terminal apparatus on the third time-frequency resource comprises:
sending the first data to the third terminal apparatus on the second time-frequency resource.

6. The method according to claim 1, wherein
the second time-frequency resource comprises a time-frequency resource available for sending data to the third terminal apparatus; or
the second time-frequency resource comprises the time-frequency resource unavailable for sending data to the third terminal apparatus.

7. The method according to claim 1, wherein
the at least one second terminal apparatus comprises a third terminal apparatus.

8. A terminal apparatus, configured to implement the method steps as claimed in any one of claims 1 to 7.

9. A computer program comprising instructions, wherein when executed by a communications apparatus, the instructions cause the communications apparatus to perform the method according to any one of claims 1 to 7.

## Patentansprüche

1. Kommunikationsverfahren, das durch eine erste Endgeräteeinrichtung durchgeführt wird, umfassend:
Detektieren (S61) von Sidelink-Steuerungsinformationen, SCI, von mindestens einer zweiten Endgeräteeinrichtung, um eine erste Zeit-Frequenz-Ressource zu bestimmen, wobei die erste Zeit-Frequenz-Ressource eine Zeit-Frequenz-Ressource umfasst, die nicht dazu verfügbar ist, Daten an eine dritte Endgeräteeinrichtung zu senden;
Senden (S62) erster Informationen an die dritte Endgeräteeinrichtung, wobei die ersten Informationen dazu dienen, Bestimmen zweiter Informationen auszulösen;
Empfangen (S64) der zweiten Informationen von der dritten Endgeräteeinrichtung, wobei die zweiten Informationen eine zweite Zeit-Frequenz-Ressource angeben und die zweite Zeit-Frequenz-Ressource dazu dient, eine Zeit-Frequenz-Ressource zum Senden von Daten an die dritte Endgeräteeinrichtung zu bestimmen;
Bestimmen (S65) einer dritten Zeit-Frequenz-Ressource basierend auf der ersten Zeit-Frequenz-Ressource und der zweiten Zeit-Frequenz-Ressource; und
Senden (S66) erster Daten an die dritte Endgeräteeinrichtung auf der dritten Zeit-Frequenz-Ressource.

2. Verfahren nach Anspruch 1, wobei das Senden erster Informationen an die dritte Endgeräteeinrichtung Folgendes umfasst:
Senden erster Steuerungsinformationen an die dritte Endgeräteeinrichtung, wobei die ersten Steuerungsinformationen erste SCI und zweite SCI umfassen, die ersten SCI SCI einer 1. Stufe sind, die zweiten SCI SCI einer 2. Stufe sind und die zweiten SCI die ersten Informationen umfassen.

3. Verfahren nach Anspruch 2, wobei die ersten SCI ferner ein erstes Feld umfassen und das erste Feld angibt, dass die zweiten SCI die ersten Informationen umfassen.

4. Verfahren nach Anspruch 1, wobei die ersten Informationen ferner Informationen zum Angeben einer Datenpaketgröße der ersten Daten umfassen und die Datenpaketgröße der ersten Daten zum Bestimmen der zweiten Zeit-Frequenz-Ressource dient.

5. Verfahren nach Anspruch 1, wobei die zweite Zeit-Frequenz-Ressource eine verfügbare Zeit-Frequenz-Ressource ist und das Senden erster Daten an die dritte Endgeräteeinrichtung auf der dritten Zeit-Frequenz-Ressource Folgendes umfasst:
Senden der ersten Daten an die dritte Endgeräteeinrichtung auf der zweiten Zeit-Frequenz-Ressource.

6. Verfahren nach Anspruch 1, wobei die zweite Zeit-Frequenz-Ressource eine Zeit-Frequenz-Ressource umfasst, die zum Senden von Daten an die dritte Endgeräteeinrichtung verfügbar ist; oder die zweite Zeit-Frequenz-Ressource die Zeit-Frequenz-Ressource umfasst, die zum Senden von Daten an die dritte Endgeräteeinrichtung nicht verfügbar ist.

7. Verfahren nach Anspruch 1, wobei die mindestens eine zweite Endgeräteeinrichtung eine dritte Endgeräteeinrichtung umfasst.

8. Endgeräteeinrichtung, die dazu konfiguriert ist, die Verfahrensschritte nach einem der Ansprüche 1 bis 7 umzusetzen.

9. Computerprogramm, umfassend Anweisungen, wobei die Anweisungen, wenn sie durch eine Kommunikationseinrichtung ausgeführt werden, die Kommunikationseinrichtung dazu veranlassen, das Verfahren nach einem der Ansprüche 1 bis 7 durchzuführen.

## Revendications

1. Procédé de communication, réalisé par un premier appareil terminal, comprenant :
la détection (S61) d'informations de commande de liaison latérale, SCI, à partir d'au moins un deuxième appareil terminal pour déterminer une première ressource temps-fréquence, dans lequel la première ressource temps-fréquence comprend une ressource temps-fréquence qui n'est pas disponible pour l'envoi de données à un troisième appareil terminal ;
l'envoi (S62) de premières informations au troisième appareil terminal, dans lequel les premières informations sont destinées à déclencher la détermination de secondes informations ;
la réception (S64) des secondes informations en provenance du troisième appareil terminal, dans lequel les secondes informations indiquent une deuxième ressource temps-fréquence, et la deuxième ressource temps-fréquence est destinée à déterminer une ressource temps-fréquence destinée à envoyer des données au troisième appareil terminal ;
la détermination (S65) d'une troisième ressource temps-fréquence sur la base de la première ressource temps-fréquence et de la deuxième ressource temps-fréquence ; et
l'envoi (S66) de premières données au troisième appareil terminal sur la troisième ressource temps-fréquence.

2. Procédé selon la revendication 1, dans lequel l'envoi de premières informations au troisième appareil terminal comprend : l'envoi de premières informations de commande au troisième appareil terminal, dans lequel les premières informations de commande comprennent de premières SCI et de secondes SCI, les premières SCI sont des SCI de 1er étage, les secondes SCI sont des SCI de 2d étage, et les secondes SCI comprennent les premières informations.

3. Procédé selon la revendication 2, dans lequel les premières SCI comprennent en outre un premier champ, et le premier champ indique que les secondes SCI comprennent les premières informations.

4. Procédé selon la revendication 1, dans lequel les premières informations comprennent en outre des informations destinées à indiquer une taille de paquet de données des premières données, et la taille de paquet de données des premières données est destinée à déterminer la deuxième ressource temps-fréquence.

5. Procédé selon la revendication 1, dans lequel la deuxième ressource temps-fréquence est une ressource temps-fréquence disponible, et l'envoi de premières données au troisième appareil terminal sur la troisième ressource temps-fréquence comprend :
l'envoi des premières données au troisième appareil terminal sur la deuxième ressource temps-fréquence.

6. Procédé selon la revendication 1, dans lequel
la deuxième ressource temps-fréquence comprend une ressource temps-fréquence disponible pour l'envoi de données au troisième appareil terminal ; ou
la deuxième ressource temps-fréquence comprend la ressource temps-fréquence qui n'est pas disponible pour l'envoi de données au troisième appareil terminal.

7. Procédé selon la revendication 1, dans lequel
l'au moins un deuxième appareil terminal comprend un troisième appareil terminal.

8. Appareil terminal, configuré pour mettre en œuvre les étapes du procédé selon l'une quelconque des revendications 1 à 7.

9. Programme informatique comprenant des instructions, dans lequel lorsqu'elles sont exécutées par un appareil de communication, les instructions amènent l'appareil de communication à réaliser le procédé selon l'une quelconque des revendications 1 à 7.
